# EUROPEAN PATENT APPLICATION

(11) **EP 2 543 635 A1**
(43) Date of publication of application: **09.01.2013**
(21) Application number: 11739599.6
(22) Date of filing: 11.01.2011
(51) Int. Cl.: C01B 31/20, B01D 53/14, B01D 53/62, F23J 15/00, F23L 15/00

(54) **SYSTEM AND METHOD FOR RECOVERING HEAT FROM CO2 RECOVERY DEVICE**

(30) Priority: 08.02.2010 JP 2010025901
(71) Applicant: Mitsubishi Heavy Industries, Ltd., Tokyo 108-8215 (JP); The Kansai Electric Power Co., Inc., Osaka 530-8270 (JP)
(72) Inventor: IIJIMA, Masaki, Tokyo 108-8215 (JP); OISHI, Tsuyoshi, Tokyo 108-8215 (JP); TATSUMI, Masahiko, Amagasaki, Hyogo-ken 661-0974 (JP); YAGI, Yasuyuki, Amagasaki, Hyogo-ken 661-0974 (JP); KAIBARA, Kazuhiko, Amagasaki, Hyogo-ken 661-0974 (JP)
(74) Representative: HOFFMANN EITLE
(86) International application number: PCT/JP2011/050286
(87) International publication number: WO 2011/096250

(57) **Abstract**

A heat recovery system of a CO₂ recovery unit (55) including an absorber that removes CO₂ in flue gas (101) discharged from a boiler (51) by absorbing CO₂ by an absorbent, and a regenerator that emits CO₂ from the absorbent having absorbed CO₂ for reusing the absorbent in the absorber. The heat recovery system further includes a Ljungström heat exchanger (57) that performs heat exchange between the flue gas (101) discharged from the boiler (51) and before reaching the CO₂ recovery unit (55) and unburned air (102) supplied to the boiler (51), and an air preheater (58) that preheats the unburned air (102) before reaching the Ljungström heat exchanger (57) by exhaust heat from the CO₂ recovery unit (55).

## Description

### Field

The present invention relates to a heat recovery system and a heat recovery method of a CO₂ recovery unit that effectively use heat discharged from the CO₂ recovery unit.

### Background

The greenhouse effect due to CO₂ has been pointed out as a cause of global warming, and there has been an urgent need to take measures against the greenhouse effect for protecting the global environment in an international scale. Generation sources of CO₂ extend over all human activities that burn fossil fuel, and demands for emission limitation are further increasing. Under these circumstances, a method of removing and recovering CO₂ in flue gas by bringing flue gas discharged from a boiler into contact with an amine absorbent such as an amine compound solution has been intensively studied. The method is targeted for power generation facilities such as a thermal power plant that uses a large amount of fossil fuel.

As a CO₂ recovery unit that recovers CO₂ from flue gas by using an absorbent, there has been known an apparatus that removes CO₂ in flue gas by bringing flue gas into contact with a CO₂ absorbent in an absorber, heats the absorbent that has absorbed CO₂ in a regenerator, thereby emitting CO₂ and regenerating the absorbent, and returns the absorbent to the absorber and reuses the absorbent (see, for example, Patent Literature 1).

### Citation List

### Patent Literature

Patent Literature 1: Japanese Patent Application Laid-open No. 5-245339

### Summary

### Technical Problem

In the CO₂ recovery unit described above, a large amount of low-temperature flue gas at a temperature level of 70°C to 80°C is discharged. Generally, however, because the heat of flue gas is low, the flue gas is cooled by cooling water and disposed.

The present invention has been achieved to solve the above problems, and an object of the present invention is to provide a heat recovery system and a heat recovery method of a CO₂ recovery unit that can effectively use low-temperature exhaust heat discharged at the time of recovering CO₂.

### Solution to Problem

According to an aspect of the present invention, a heat recovery system of a CO₂ recovery unit include an absorber that removes CO₂ in flue gas discharged from a boiler by absorbing CO₂ by an absorbent, and a regenerator that emits CO₂ from the absorbent having absorbed CO₂ for reusing the absorbent in the absorber. The heat recovery system inludes: a Ljungström heat exchanger that performs heat exchange between flue gas discharged from the boiler and before reaching the CO₂ recovery unit and unburned air supplied to the boiler; and an air preheater that preheats the unburned air before reaching the Ljungström heat exchanger by exhaust heat from the CO₂ recovery unit.

According to the heat recovery system of a CO₂ recovery unit, the flow rate of low-pressure steam consumed by the CO₂ recovery unit can be decreased by preheating unburned air before reaching the Ljungström heat exchanger by low-temperature exhaust heat discharged at the time of recovering CO₂.

Furthermore, because the Ljungström heat exchanger performs heat exchange between flue gas containing sulfur content and unburned air, a heat reservoir may be subjected to sulfuric acid corrosion due to dew condensation generated on a heat transfer surface of the heat reservoir. However, according to the heat recovery system of a CO₂ recovery unit, the gas temperature of unburned air on an inlet side of the Ljungström heat exchanger is raised, and the gas temperature of flue gas on an outlet side of the Ljungström heat exchanger is also raised. As a result, an average cold-end temperature ((the gas temperature on the outlet side of flue gas + the gas temperature on the inlet side of unburned air)/2) of the Ljungström heat exchanger increases. Consequently, dew condensation on the heat transfer surface of the heat reservoir of the Ljungström heat exchanger can be prevented to suppress sulfuric acid corrosion of the heat reservoir.

Advantageously, the heat recovery system of a CO₂ recovery unit further includes a heat recovery device that recovers heat of the flue gas before reaching the CO₂ recovery unit through the Ljungström heat exchanger and supplies recovered heat to the CO₂ recovery unit.

According to the heat recovery system of a CO₂ recovery unit, the flow rate of low-pressure steam consumed by the CO₂ recovery unit can be further decreased by recovering the heat of flue gas after passing through the Ljungström heat exchanger, while preheating unburned air before reaching the Ljungström heat exchanger by low-temperature exhaust heat discharged at the time of recovering CO₂.

Advantageously, in the heat recovery system of a CO₂ recovery unit, the heat recovery system is applied to a power generation plant that drives a steam turbine by superheated steam from the boiler to generate power.

According to the heat recovery system of a CO₂ recovery unit, because the gas temperature of unburned air supplied to the boiler increases, the flow rate of superheated steam to be supplied from the boiler to the steam turbine increases, thereby enabling to improve the power generation efficiency of a power generation plant.

Advantageously, in the heat recovery system of a CO₂ recovery unit, the air preheater indirectly heats the unburned air by circulating a heat medium heated by heat transfer of exhaust heat from the CO₂ recovery unit.

According to the heat recovery system of a CO₂ recovery unit, exhaust heat fluid can be prevented from flowing out, as compared to a case where unburned air is directly heated by using exhaust heat fluid of the CO₂ recovery unit.

Advantageously, in the heat recovery system of a CO₂ recovery unit, the air preheater directly heats the unburned air by circulating a exhaust heat fluid from the CO₂ recovery unit.

According to the heat recovery system of a CO₂ recovery unit, the heat transfer efficiency can be improved with respect to a case where unburned air is indirectly heated via a heat medium.

According to another aspect of the present invention, a heat recovery method of a CO₂ recovery unit including a CO₂ recovery step of removing CO₂ in flue gas discharged from a boiler by absorbing CO₂ by an absorbent, emitting CO₂ from the absorbent having absorbed CO₂, and of reusing the absorbent for absorbing CO₂, includes: a heat exchanging step of performing heat exchange between flue gas discharged from the boiler and before reaching the CO₂ recovery step and unburned air supplied to the boiler; and an air preheating step of preheating the unburned air before reaching the heat exchanging step by exhaust heat from the CO₂ recovery step.

According to the heat recovery method of a CO₂ recovery unit, the flow rate of low-pressure steam consumed by the CO₂ recovery unit can be decreased by preheating unburned air before reaching the heat exchanging step by low-temperature exhaust heat discharged at the time of recovering CO₂.

Furthermore, because the heat exchange between flue gas containing sulfur content and unburned air is performed at the heat exchanging step, a heat reservoir may be subjected to sulfuric acid corrosion due to dew condensation generated on a heat transfer surface of the heat reservoir. However, according to the heat recovery method of a CO₂ recovery unit, the gas temperature of unburned air on an inlet side of the heat exchanging step is raised, and the gas temperature of flue gas on an outlet side of the heat exchanging step is also raised. As a result, an average cold-end temperature ((the gas temperature on the outlet side of flue gas + the gas temperature on the inlet side of unburned air)/2) at the heat exchanging step increases. Consequently, dew condensation on the heat transfer surface of the heat reservoir at the heat exchanging step can be prevented to suppress sulfuric acid corrosion of the heat reservoir.

Advantageously, the heat recovery method of a CO₂ recovery unit further includes a heat recovery step of recovering heat of the flue gas before reaching the CO₂ recovery step through the heat exchanging step and of supplying recovered heat to the CO₂ recovery step.

According to the heat recovery method of a CO₂ recovery unit, the flow rate of low-pressure steam consumed at the CO₂ recovery step can be further decreased by recovering the heat of flue gas after passing through the heat exchanging step, while preheating unburned air before reaching the Ljungström heat exchanger by low-temperature exhaust heat discharged at the time of recovering CO₂.

Advantageously, the heat recovery method of a CO₂ recovery unit, further includes a power generation step of driving a steam turbine by superheated steam from the boiler to generate power.

According to the heat recovery method of a CO₂ recovery unit, because the gas temperature of unburned air supplied to the boiler increases, the flow rate of superheated steam to be supplied from the boiler to the steam turbine increases, thereby enabling to improve the power generation efficiency at a power generation step. Advantageous Effects of Invention

According to the present invention, low-temperature exhaust heat discharged at the time of recovering CO₂ can be effectively used.

### Brief Description of Drawings

FIG. 1 is a schematic diagram of a power generation plant to which a heat recovery system of a CO₂ recovery unit according to a first embodiment of the present invention is applied.
FIG. 2 is a schematic diagram of the heat recovery system of a CO₂ recovery unit according to the first embodiment of the present invention.
FIG. 3 is a chart of a pattern of the heat recovery system of a CO₂ recovery unit according to the first embodiment of the present invention.
FIG. 4 is a schematic diagram of an effect of the heat recovery system of a CO₂ recovery unit according to the first embodiment of the present invention.
FIG. 5 is a schematic diagram of a heat recovery system of a CO₂ recovery unit according to a second embodiment of the present invention.
FIG. 6 is a chart of a pattern of the heat recovery system of a CO₂ recovery unit according to the second embodiment of the present invention.
FIG. 7 is a schematic diagram of an effect of the heat recovery system of a CO₂ recovery unit according to the second embodiment of the present invention.
FIG. 8 is a schematic diagram of a power generation plant to which a heat recovery system of a CO₂ recovery unit according to a third embodiment of the present invention is applied.
FIG. 9 is a schematic diagram of the heat recovery system of a CO₂ recovery unit according to the third embodiment of the present invention.
FIG. 10 is a chart of a pattern of the heat recovery system of a CO₂ recovery unit according to the third embodiment of the present invention.
FIG. 11 is a schematic diagram of an effect of the heat recovery system of a CO₂ recovery unit according to the third embodiment of the present invention.
FIG. 12 is a schematic diagram of a heat recovery system of a CO₂ recovery unit according to a fourth embodiment of the present invention.
FIG. 13 is a schematic diagram of an effect of the heat recovery system of a CO₂ recovery unit according to the fourth embodiment of the present invention. Description of Embodiments

Exemplary embodiments of the present invention will be explained below in detail with reference to the accompanying drawings. The present invention is not limited to these embodiments. In addition, constituent elements in the following embodiments include elements that can be easily replaced by those skilled in the art, or substantially the same elements.

### [First embodiment]

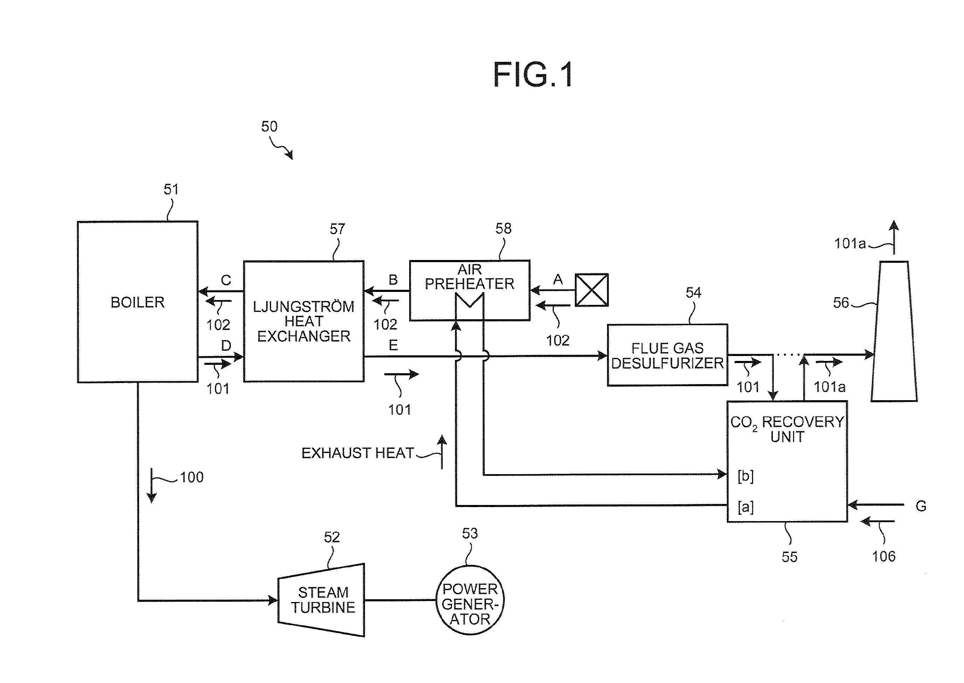

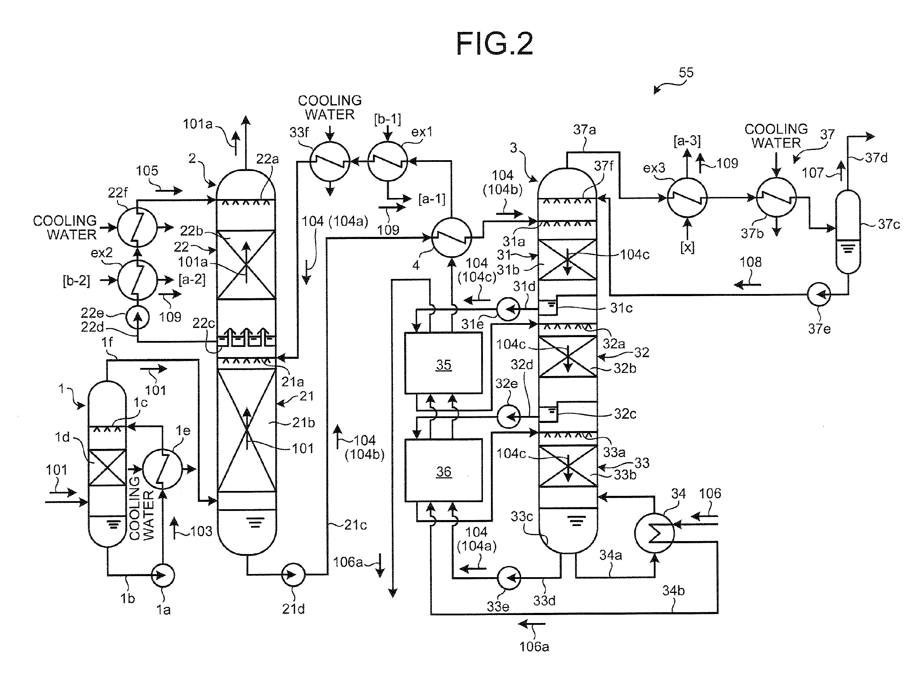

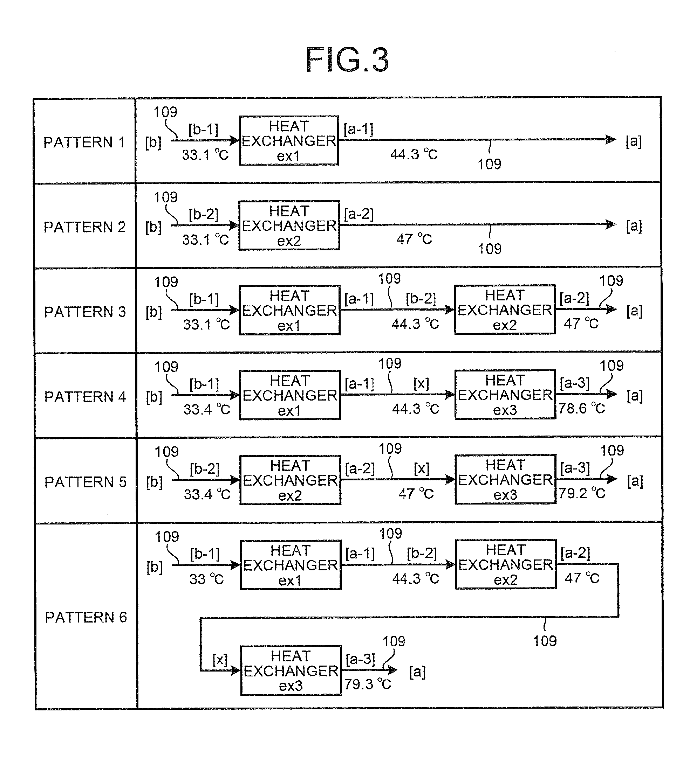

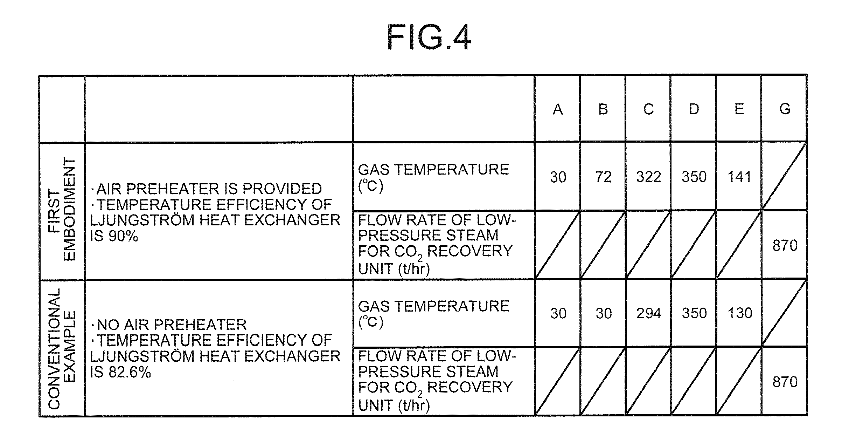

A first embodiment is explained with reference to the drawings. FIG. 1 is a schematic diagram of a power generation plant to which a heat recovery system of a CO₂ recovery unit according to the first embodiment is applied. FIG. 2 is a schematic diagram of the heat recovery system of a CO₂ recovery unit according to the first embodiment. FIG. 3 is a chart of a pattern of the heat recovery system of a CO₂ recovery unit according to the first embodiment. FIG. 4 is a schematic diagram of an effect of the heat recovery system of a CO₂ recovery unit according to the first embodiment.

As shown in FIG. 1, a power generation plant 50 mainly includes a boiler 51 that heats water in a sealed vessel by thermal energy acquired by burning fuel to acquire high-temperature and high-pressure superheated steam 100, a steam turbine 52 that acquires rotative power by the superheated steam 100 from the boiler 51, and a power generator 53 that generates power by the rotative power of the steam turbine 52. Furthermore, the power generation plant 50 includes a flue gas desulfurizer 54 that removes sulfur content (including a sulfur compound) contained in flue gas 101 discharged from the boiler 51, and a CO₂ recovery unit 55 that removes CO₂ (carbon dioxide) contained in the flue gas 101 discharged from the boiler 51. That is, the power generation plant 50 generates power by the superheated steam 100 from the boiler 51, and discharges decarbonated flue gas 101a, in which sulfur content and CO₂ discharged from the boiler 51 are removed, from a stack 56.

In the power generation plant 50, the boiler 51 is attached with a Ljungström heat exchanger 57. The Ljungström heat exchanger 57 performs heat exchange between the flue gas 101 discharged from the boiler 51 and unburned air 102 supplied to the boiler 51. The Ljungström heat exchanger 57 improves the thermal efficiency of the boiler 51 by preheating the unburned air 102 supplied to the boiler 51.

The heat recovery system of the CO₂ recovery unit 55 according to the present embodiment includes an air preheater 58 that preheats the unburned air 102 before reaching the Ljungström heat exchanger 57 by exhaust heat from the CO₂ recovery unit 55.

Exhaust heat from the CO₂ recovery unit 55 is specifically explained below. The CO₂ recovery unit 55 includes a cooling column 1 that cools the flue gas 101 discharged from the boiler 51 by cooling water 103, an absorber 2 that brings a lean solution 104a of an absorbent 104, which is an aqueous solution of an amine compound that absorbs CO₂, into countercurrent contact with the flue gas 101 so that CO₂ in the flue gas 101 is absorbed by the absorbent 104 and discharges the decarbonated flue gas 101a in which CO₂ has been removed, and a regenerator 3 that emits CO₂ from a rich solution 104b of the absorbent 104 having absorbed CO₂ to regenerate it to the lean solution 104a.

In the cooling column 1, the flue gas 101 containing CO₂ is boosted by a flue gas blower (not shown) and fed into the cooling column 1, and brought into countercurrent contact with the cooling water 103, thereby cooling the flue gas 101.

The cooling water 103 is accumulated in a lower part of the cooling column 1 and is supplied to an upper part of the cooling column 1 by a humidified cooling-water circulating pump 1a through a cooling water pipe 1b outside of the cooling column 1. The cooling water 103 is brought into countercurrent contact with the flue gas 101 moving upward at a position of a packed bed 1d provided in a process leading to the lower part of the cooling column 1, while flowing down from a nozzle 1c provided in the upper part of the cooling column 1. Furthermore, a cooler 1e that condenses the cooling water 103 by cooling to acquire condensed water is provided in the cooling water pipe 1b. The flue gas 101 cooled in the cooling column 1 is discharged from a top of the cooling column 1 through a flue gas pipe 1f and supplied to the absorber 2.

The absorber 2 has a CO₂ absorbing unit 21 in a lower half thereof, and a flushing unit 22 in an upper half thereof. The CO₂ absorbing unit 21 brings the flue gas 101 supplied from the cooling column 1 into countercurrent contact with the lean solution 104a of the absorbent 104, so that CO₂ in the flue gas 101 is absorbed by the absorbent 104.

The lean solution 104a of the absorbent 104 is supplied from the regenerator 3, and brought into countercurrent contact with the flue gas 101 moving upward at a position of a packed bed 21b provided in a process leading to the lower part of the absorber 2, while flowing down from a nozzle 21a, to become the rich solution 104b having absorbed CO₂, and is accumulated at a bottom of the absorber 2. The rich solution 104b of the absorbent 104 accumulated at the bottom of the absorber 2 is pumped by a rich-solution discharge pump 21d installed in a rich solution pipe 21c outside of the absorber 2, and supplied to the regenerator 3. Furthermore, while being supplied to the regenerator 3 through the rich solution pipe 21c, the rich solution 104b of the absorbent 104 is heat-exchanged with the lean solution 104a of the absorbent 104 being supplied to the absorber 2 through a lean solution pipe 33d described later by a rich-lean heat exchanger 4.

The flushing unit 22 brings the decarbonated flue gas 101a with CO₂ being removed by the CO₂ absorbing unit 21 into countercurrent contact with wash water 105 to remove the amine compound entrained with the decarbonated flue gas 101a by the wash water 105, and discharges the decarbonated flue gas 101a with the amine compound being removed, to outside of the absorber 2.

The wash water 105 is brought into countercurrent contact with the decarbonated flue gas 101a moving upward at a position of a packed bed 22b provided in a process going downward, while flowing down from a nozzle 22a, and is accumulated in a water receptor 22c. The wash water 105 accumulated in the water receptor 22c is pumped and circulated by a wash-water discharge pump 22e installed in a wash water pipe 22d outside of the absorber 2, cooled by a cooler 22f, and caused to flow down from the nozzle 22a again.

The absorber 3 recovers CO₂ from the rich solution 104b of the absorbent 104, regenerates it as the lean solution 104a, and accumulates the lean solution 104a at the bottom, thereby emitting CO₂ from the absorbent 104 having absorbed CO₂. The regenerator 3 is divided into three parts, which are an upper part, a middle part, and a lower part. That is, these are an upper regenerating unit 31, a middle regenerating unit 32, and a lower regenerating unit 33.

In the upper regenerating unit 31, the absorbent 104 is supplied from the rich solution pipe 21c of the CO₂ absorbing unit 21 in the absorber 2, to flow down from a nozzle 31a, passes through a packed bed 31b provided in a process going downward, and accumulated in a chimney tray 31c. The absorbent 104 accumulated in the chimney tray 31c is supplied to the middle regenerating unit 32, while being pumped to outside of the regenerator 3 by a semi-lean-solution discharge pump 31e installed in a semi-lean-solution extracting pipe 31d.

In the middle regenerating unit 32, the absorbent 104 is supplied from the semi-lean-solution extracting pipe 31d of the upper regenerating unit 31 to flow down from a nozzle 32a, passes through a packed bed 32b provided in a process going downward, and accumulated in a chimney tray 32c. The absorbent 104 accumulated in the chimney tray 32c is supplied to the lower regenerating unit 33, while being pumped to outside of the regenerator 3 by a semi-lean-solution discharge pump 32e installed in a semi-lean-solution extracting pipe 32d.

In the lower regenerating unit 32, the absorbent 104 is supplied from the semi-lean-solution extracting pipe 32d of the middle regenerating unit 32 to flow down from a nozzle 33a, passes through a packed bed 33b provided in a process going downward, and accumulated at a bottom 33c of the regenerator 3. The absorbent 104 accumulated at the bottom 33c of the regenerator 3 is pumped to outside of the regenerator 3 by a lean-solution discharge pump 33e installed in a lean-solution extracting pipe 33d, heat-exchanged with the rich solution 104b of the absorbent 104 being supplied to the regenerator 3 through the rich solution pipe 21c by the rich-lean heat exchanger 4, and then, supplied to the absorber 2 while being cooled by a cooler 33f.

A regenerating heater 34 that uses low-pressure steam 106 from the steam turbine 52 as a source of heat is provided outside of the regenerator 3. A part of the absorbent 104 accumulated at the bottom 33c of the regenerator 3 is heated by the regenerating heater 34 while being extracted to outside of the regenerator 3 via a heating pipe 34a to become the lean solution 104a, and returned to the bottom 33c of the regenerator 3 and accumulated therein. The low-pressure steam 106 supplied to the regenerating heater 34 heats the absorbent 104 while passing through the heating pipe 34a, to become steam drain 106a and discharged via a drain pipe 34b.

A lean-solution/steam-drain heat recovery unit 35 is provided in the semi-lean-solution extracting pipe 31d of the upper regenerating unit 31. The lean-solution/steam-drain heat recovery unit 35 performs heat exchange between the absorbent 104 being supplied to the middle regenerating unit 32 through the semi-lean-solution extracting pipe 31d and the lean solution 104a of the absorbent 104 being supplied to the absorber 2 via the lean solution pipe 33d and the steam drain 106a being discharged via the drain pipe 34b.

A lean-solution/steam-drain heat recovery unit 36 is provided in the semi-lean-solution extracting pipe 32d of the middle regenerating unit 32. The lean-solution/steam-drain heat recovery unit 36 performs heat exchange between the absorbent 104 being supplied to the lower regenerating unit 33 through the semi-lean-solution extracting pipe 32d and the lean solution 104a of the absorbent 104 being supplied to the absorber 2 via the lean solution pipe 33d and the steam drain 106a being discharged via the drain pipe 34b.

That is, in the regenerator 3, the rich solution 104b of the absorbent 104 to be supplied to the upper regenerating unit 31 flows down from the nozzle 31a, while being heated by heat exchange with the lean solution 104a of the absorbent 104 being supplied to the absorber 2 by the rich-lean heat exchanger 4, in the process of being supplied to the regenerator 3 via the rich solution pipe 21c. The rich solution 104b of the absorbent 104 becomes a semi-lean solution 104c with the most part of CO₂ being emitted by an endothermic reaction, while passing through the packed bed 31b in the process going downward, and is accumulated in the chimney tray 31c.

The semi-lean solution 104c of the absorbent 104 to be supplied to the middle regenerating unit 32 from the upper regenerating unit 31 through the semi-lean-solution extracting pipe 31d flows down from the nozzle 32a, while being heated by heat exchange by the lean-solution/steam-drain heat recovery unit 35 in the process of being supplied to the middle regenerating unit 32 via the semi-lean-solution extracting pipe 31d. CO₂ is further emitted from the semi-lean solution 104c of the absorbent 104 by the endothermic reaction, while passing through the packed bed 32b in the process going downward, and the semi-lean solution 104c is accumulated in the chimney tray 32c.

The semi-lean solution 104c of the absorbent 104 to be supplied to the lower regenerating unit 33 from the middle regenerating unit 32 through the semi-lean-solution extracting pipe 32d flows down from the nozzle 33a, while being heated by heat exchange by the lean-solution/steam-drain heat recovery unit 36 in the process of being supplied to the lower regenerating unit 33 via the semi-lean-solution extracting pipe 32d. The semi-lean solution 104c of the absorbent 104 becomes the lean solution 104a with substantially whole CO₂ being emitted by the endothermic reaction, while passing through the packed bed 33b in the process going downward, and is accumulated at the bottom 33c of the regenerator 3. The lean solution 104a accumulated at the bottom 33c of the regenerator 3 is heated by the low-pressure steam 106 in the regenerating heater 34.

CO₂ gas 107 removed from the absorbent 104 in the respective regenerating units 31, 32, and 33 is recovered by a CO₂ recovering unit 37. In the CO₂ recovering unit 37, the CO₂ gas 107 removed from the absorbent 104 moves upward in the regenerator 3, and is discharged to outside of the regenerator 3 from a top of the regenerator 3 through a condensed water pipe 37a. After the CO₂ gas 107 is cooled by a regenerator reflux condenser 37b while passing through the condensed water pipe 37a, moisture is condensed by a CO₂ separator 37c and separated from condensed water 108, and the CO₂ gas 107 is guided to a CO₂ processing step (not shown) by a recovered CO₂ discharge pipe 37d. The condensed water 108 separated from CO₂ by the CO₂ separator 37c is pumped by a condensed water pump 37e installed in the condensed water pipe 37a and supplied to the regenerator 3, to flow down from a nozzle 37f provided at the top in the regenerator 3.

In the configuration described above, the regenerator 3 includes three stages, which are an upper stage, a middle stage, and a lower stage. That is, these are the upper regenerating unit 31, the middle regenerating unit 32, and the lower regenerating unit 33. However, the regenerator 3 can include two stages, which are upper and lower stages. That is, these are the upper regenerating unit 31 and the lower regenerating unit 33. Furthermore, the regenerator 3 is not limited to the upper, middle, and lower stages, which are the upper regenerating unit 31, the middle regenerating unit 32, and the lower regenerating unit 33, and can include three or more regenerating units.

In the CO₂ recovery unit 55, a heat recovery system that effectively uses low-temperature exhaust heat discharged at the time of recovering CO₂ is explained with reference to FIG. 2. In the lean solution pipe 33d for supplying the lean solution 104a of the absorbent 104 from the regenerator 3 to the absorber 2, a first heat exchanger ex1 is provided between the rich-lean heat exchanger 4 and the cooler 33f. The first heat exchanger ex1 performs heat exchange between the lean solution 104a of the absorbent 104 before being cooled by the cooler 31f via the lean solution pipe 33d and a heat medium (for example, water) 109, and circulates the heat medium to which the exhaust heat of the lean solution 104a is transferred.

In the wash water pipe 22d in the flushing unit 22 of the absorber 2, a second heat exchanger ex2 is provided between the wash-water discharge pump 22e and the cooler 22f. The second heat exchanger ex2 performs heat exchange between the heat medium (for example, water) 109 and the wash water 105 before being cooled by the cooler 22f via the wash water pipe 22d, and circulates the heat medium to which the exhaust heat of the wash water 105 is transferred.

Furthermore, in the condensed water pipe 37a in the CO₂ recovering unit 37 of the regenerator 3, a third heat exchanger ex3 is provided between the regenerator 3 and the regenerator reflux condenser 37b. The third heat exchanger ex3 performs heat exchange between the CO₂ gas 107 before being cooled by the regenerator reflux condenser 37b via the condensed water pipe 37a and the heat medium 109 in the first heat exchanger ex1 or the second heat exchanger ex2 and circulates the heat medium 109, while transferring the exhaust heat of the CO₂ gas 107 to the heat medium 109.

All or at least one of the heat medium 109 heat-exchanged by these heat exchangers ex1, ex2, and ex3 is circulated from [a] to [b] of the CO₂ recovery unit 55 so as to pass through the air preheater 58 of the power generation plant 50 shown in FIG. 1, and used for preheating the unburned air 102 before reaching the Ljungström heat exchanger 57.

Specifically, respective patterns in which all or at least one of the heat medium 109 heat-exchanged by the respective heat exchangers ex1, ex2, and ex3 is used for preheating the unburned air 102 are explained below with reference to FIGS. 1 to 3.

A pattern 1 shown in FIG. 3 uses the heat medium 109 circulated only to the first heat exchanger ex1, in which the heat medium 109 at a temperature of 44.3°C heat-transferred by the first heat exchanger ex1 is supplied from [a-1] (corresponding to [a] shown in FIG. 1) to the air preheater 58. The heat medium 109 at a temperature of 33.1°C heat-exchanged via the air preheater 58 is returned to [b-1] (corresponding to [b] in FIG. 1) and heat-transferred again through the first heat exchanger ex1.

A pattern 2 shown in FIG. 3 uses the heat medium 109 circulated only to the second heat exchanger ex2, in which the heat medium 109 at a temperature of 47°C heat-transferred by the second heat exchanger ex2 is supplied from [a-2] (corresponding to [a] shown in FIG. 1) to the air preheater 58. The heat medium 109 at a temperature of 33.1°C heat-exchanged via the air preheater 58 is returned to [b-2] (corresponding to [b] in FIG. 1) and heat-transferred again through the second heat exchanger ex2.

A pattern 3 shown in FIG. 3 uses the heat medium 109 circulated to the first heat exchanger ex1 and the second heat exchanger ex2, in which the heat medium 109 at a temperature of 44.3°C heat-transferred by the first heat exchanger ex1 is supplied from [a-1] to [b-2], and then the heat medium 109 at a temperature of 47°C heat-transferred by the second heat exchanger ex2 is supplied from [a-2] (corresponding to [a] shown in FIG. 1) to the air preheater 58. The heat medium 109 at a temperature of 33.1°C heat-exchanged via the air preheater 58 is returned to [b-1] (corresponding to [b] in FIG. 1) and heat-transferred again through the first heat exchanger ex1 and the second heat exchanger ex2.

A pattern 4 shown in FIG. 3 uses the heat medium 109 circulated to the first heat exchanger ex1 and the third heat exchanger ex3, in which the heat medium 109 at a temperature of 44.3°C heat-transferred by the first heat exchanger ex1 is supplied from [a-1] to [x] (corresponding to [a] in FIG. 1), and then the heat medium 109 at a temperature of 78.6°C heat-transferred by the third heat exchanger ex3 is supplied from [a-3] to the air preheater 58. The heat medium 109 at a temperature of 33.4°C heat-exchanged via the air preheater 58 is returned to [b-1] (corresponding to [b] in FIG. 1) and heat-transferred again through the first heat exchanger ex1 and the third heat exchanger ex3.

A pattern 5 shown in FIG. 3 uses the heat medium 109 circulated to the second heat exchanger ex2 and the third heat exchanger ex3, in which the heat medium 109 at a temperature of 47°C heat-transferred by the second heat exchanger ex2 is supplied from [a-2] to [x], and then the heat medium 109 at a temperature of 79.2°C heat-transferred by the third heat exchanger ex3 is supplied from [a-3] (corresponding to [a] in FIG. 1) to the air preheater 58. The heat medium 109 at a temperature of 33.4°C heat-exchanged via the air preheater 58 is returned to [b-2] (corresponding to [b] in FIG. 1) and heat-transferred again through the second heat exchanger ex2 and the third heat exchanger ex3.

A pattern 6 shown in FIG. 3 uses the heat medium 109 circulated to the first heat exchanger ex1, the second heat exchanger ex2, and the third heat exchanger ex3, in which the heat medium 109 at a temperature of 44.3°C heat-transferred by the first heat exchanger ex1 is supplied from [a-1] to [b-2], the heat medium 109 at a temperature of 47°C heat-transferred by the second heat exchanger ex2 is supplied from [a-2] to [x], and then the heat medium 109 at a temperature of 79.3°C heat-transferred by the third heat exchanger ex3 is supplied from [a-3] (corresponding to [a] in FIG. 1) to the air preheater 58. The heat medium 109 at a temperature of 33°C heat-exchanged via the air preheater 58 is returned to [b-1] (corresponding to [b] in FIG. 1) and heat-transferred again through the first heat exchanger ex1, the second heat exchanger ex2, and the third heat exchanger ex3.

In the heat recovery system of the CO₂ recovery unit 55 according to the present embodiment, an effect of a case where the air preheater 58 is provided, assuming the temperature efficiency of the Ljungström heat exchanger 57 to be 90%, and the pattern 6 shown in FIG. 3 is applied is explained below with reference to FIG. 4. As shown in FIG. 4, in the case of the gas temperature of the unburned air 102 being 30°C corresponding to the ambient air, the gas temperature of the unburned air 102 at a position A in an upstream of the air preheater 58 in FIG. 1 was 30°C, and the gas temperature of the preheated unburned air 102 at a position B in an upstream of the Ljungström heat exchanger 57 became 72°C by passing through the air preheater 58. The gas temperature of the heat-exchanged unburned air 102 at a position C in an upstream of the boiler 51 via the Ljungström heat exchanger 57 became 322°C. Furthermore, the gas temperature of the flue gas 101 at a position D in the upstream of the Ljungström heat exchanger 57 via the boiler 51 became 350°C. Further, the gas temperature of the heat-exchanged flue gas 101 at a position E in an upstream of the flue gas desulfurizer 54 via the Ljungström heat exchanger 57 became 141°C. At this time, a flow rate G of the low-pressure steam 106 supplied to the regenerating heater 34 of the CO₂ recovery unit 55 was 870 t/hr.

On the other hand, an effect in a conventional case where the air preheater 58 is not provided and the temperature efficiency of the Ljungström heat exchanger 57 is 82.6% is as described below. As shown in FIG. 4, when the gas temperature of the unburned air 102 is 30°C corresponding to the ambient air, in FIG. 1, the gas temperature of the unburned air 102 at the position A is 30°C. Because the air preheater 58 is not provided, the gas temperature of the unburned air 102 at the position B in the upstream of the Ljungström heat exchanger 57 becomes 30°C. The gas temperature of the heat-exchanged unburned air 102 at the position C in the upstream of the boiler 51 via the Ljungström heat exchanger 57 became 294°C. Furthermore, the gas temperature of the flue gas 101 at the position D in the upstream of the Ljungström heat exchanger 57 via the boiler 51 became 350°C. Furthermore, the gas temperature of the heat-exchanged flue gas 101 at the position E in the upstream of the flue gas desulfurizer 54 via the Ljungström heat exchanger 57 became 130°C. At this time, the flow rate G of the low-pressure steam 106 supplied to the regenerating heater 34 of the CO₂ recovery unit 55 was 870 t/hr.

In this manner, in the heat recovery system of the CO₂ recovery unit 55 according to the first embodiment, the air preheater 58 that preheats the unburned air 102 before reaching the Ljungström heat exchanger 57 by exhaust heat from the CO₂ recovery unit 55 is provided.

According to the heat recovery system of the CO₂ recovery unit 55, low-temperature exhaust heat equal to or lower than a temperature level of 70°C to 80°C discharged at the time of recovering CO₂ can be used efficiently. Specifically, as described above, a gas temperature of 294°C of the unburned air 102 at the position C supplied to the boiler 51 in the conventional case is raised by 28°C to be 322°C. A heat input to the boiler 51 increases due to the increase of 28°C, and effects equivalent to those of decreasing the flow rate of the low-pressure steam 106 consumed by the CO₂ recovery unit 55 by 56 t/hr can be acquired. The flow rate of 56 t/hr corresponds to 6% of the flow rate of the low-pressure steam 106 consumed by the CO₂ recovery unit 55. As a result, by preheating the unburned air 102 before reaching the Ljungström heat exchanger 57 by low-temperature exhaust heat equal to or lower than a temperature level of 70°C to 80°C discharged at the time of recovering CO₂, effects equivalent to those of decreasing the flow rate of the low-pressure steam 106 consumed by the CO₂ recovery unit 55 can be acquired.

Furthermore, because the Ljungström heat exchanger 57 performs heat exchange between the flue gas 101 containing sulfur content and the unburned air 102, the heat reservoir may be subjected to sulfuric acid corrosion due to dew condensation generated on the heat transfer surface of the heat reservoir. In this regard, according to the heat recovery system of the CO₂ recovery unit 55 of the first embodiment, as described above, the gas temperature of 30°C of the unburned air 102 at the position B on an inlet side of the Ljungström heat exchanger 57 in the conventional case is raised to 72°C, and the gas temperature of 130°C of the flue gas 101 at the position E on an outlet side of the Ljungström heat exchanger 57 in the conventional case is also raised to 141°C. As a result, an average cold-end temperature ((the gas temperature on the outlet side of flue gas + the gas temperature on the inlet side of unburned air)/2) of the Ljungström heat exchanger 57 increases from 80°C to 106.5°C by 26.5°C. Consequently, dew condensation on the heat transfer surface of the heat reservoir of the Ljungström heat exchanger 57 can be prevented and sulfuric acid corrosion of the heat reservoir can be suppressed.

The heat recovery system of the CO₂ recovery unit 55 according to the first embodiment is applied to the power generation plant 50 that drives the steam turbine 52 by the superheated steam 100 from the boiler 51 to generate power by the power generator 53.

As described above, according to the heat recovery system of the CO₂ recovery unit 55, the gas temperature of 294°C of the unburned air 102 at the position C supplied to the boiler 51 in the conventional case is raised by 28°C to be 322°C. Therefore, because the flow rate of the superheated steam 100 supplied from the boiler 51 to the steam turbine 52 increases, the power generation efficiency of the power generation plant 50 can be improved.

In the heat recovery system of the CO₂ recovery unit 55 according to the first embodiment, the air preheater 58 circulates the heat medium 109, to which exhaust heat from the CO₂ recovery unit 55 is heat-transferred, to heat the unburned air 102 indirectly.

According to the heat recovery system of the CO₂ recovery unit 55, a exhaust heat fluid such as the absorbent 104, the wash water 105, or the CO₂ gas 107 can be prevented from flowing out, with respect to a case where the exhaust heat fluid is used to heat the unburned air 102 directly.

A heat recovery method of the CO₂ recovery unit 55 according to the first embodiment includes a step of removing CO₂ in the flue gas 101 discharged from the boiler 51 by absorbing CO₂ by the absorbent 104, emitting CO₂ from the absorbent 104 having absorbed CO₂, and of reusing the absorbent 104 for absorbing CO₂ (CO₂ recovery step). The heat recovery method further includes a step of performing heat exchange between the flue gas 101 discharged from the boiler 51 and before reaching the CO₂ recovery step and the unburned air 102 supplied to the boiler 51 (heat exchanging step), and a step of preheating the unburned air 102 before reaching the heat exchanging step by exhaust heat from the CO₂ recovery step (air preheating step).

According to the heat recovery method of the CO₂ recovery unit 55, low-temperature exhaust heat equal to or lower than a temperature level of 70°C to 80°C discharged at the time of recovering CO₂ can be used efficiently. Specifically, the gas temperature of 294°C of the unburned air 102 at the position C supplied to the boiler 51 in the conventional case is raised by 28°C to be 322°C. A heat input to the boiler 51 increases due to the increase of 28°C, and effects equivalent to those of decreasing the flow rate of the low-pressure steam 106 consumed by the CO₂ recovery unit 55 by 56 t/hr can be acquired. The flow rate of 56 t/hr corresponds to 6% of the flow rate of the low-pressure steam 106 consumed by the CO₂ recovery unit 55. As a result, by preheating the unburned air 102 before reaching the heat exchanging step by low-temperature exhaust heat equal to or lower than a temperature level of 70°C to 80°C discharged at the time of recovering CO₂, effects equivalent to those of decreasing the flow rate of the low-pressure steam 106 consumed by the CO₂ recovery unit 55 can be acquired.

Furthermore, because heat exchange between the flue gas 101 containing sulfur content and the unburned air 102 is performed at the heat exchanging step, the heat reservoir may be subjected to sulfuric acid corrosion due to dew condensation generated on the heat transfer surface of the heat reservoir. In this regard, according to the heat recovery method of the CO₂ recovery unit 55 of the first embodiment, the gas temperature of 30°C of the unburned air 102 at the position B on the inlet side of the heat exchanging step in the conventional case is raised to 72°C, and the gas temperature of 130°C of the flue gas 101 at the position E on the outlet side of the heat exchanging step in the conventional case is also raised to 141°C. As a result, an average cold-end temperature ((the gas temperature on the outlet side of flue gas + the gas temperature on the inlet side of unburned air)/2) at the heat exchanging step increases from 80°C to 106.5°C by 26.5°C. Consequently, dew condensation on the heat transfer surface of the heat reservoir at the heat exchanging step can be prevented and sulfuric acid corrosion of the heat reservoir can be suppressed.

The heat recovery method of the CO₂ recovery unit 55 according to the first embodiment further includes a power generation step of driving the steam turbine 52 by the superheated steam 100 from the boiler 51 to generate power by the power generator 53.

According to the heat recovery method of the CO₂ recovery unit 55, the gas temperature of 294°C of the unburned air 102 at the position C supplied to the boiler 51 in the conventional case is raised by 28°C to be 322°C. Therefore, because the flow rate of the superheated steam 100 supplied from the boiler 51 to the steam turbine 52 increases, the power generation efficiency of the power generation plant 50 can be improved.

### [Second embodiment]

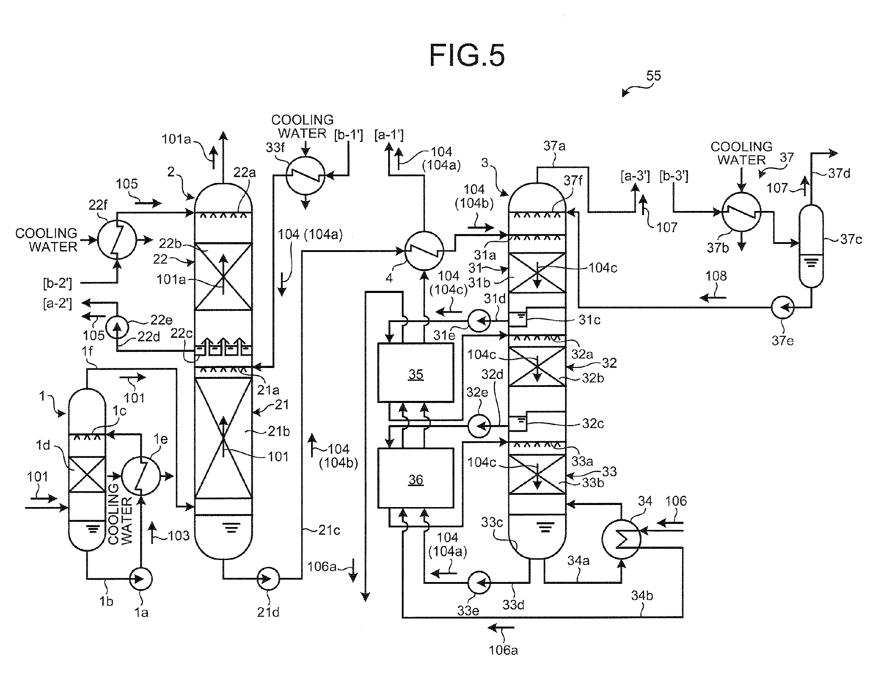

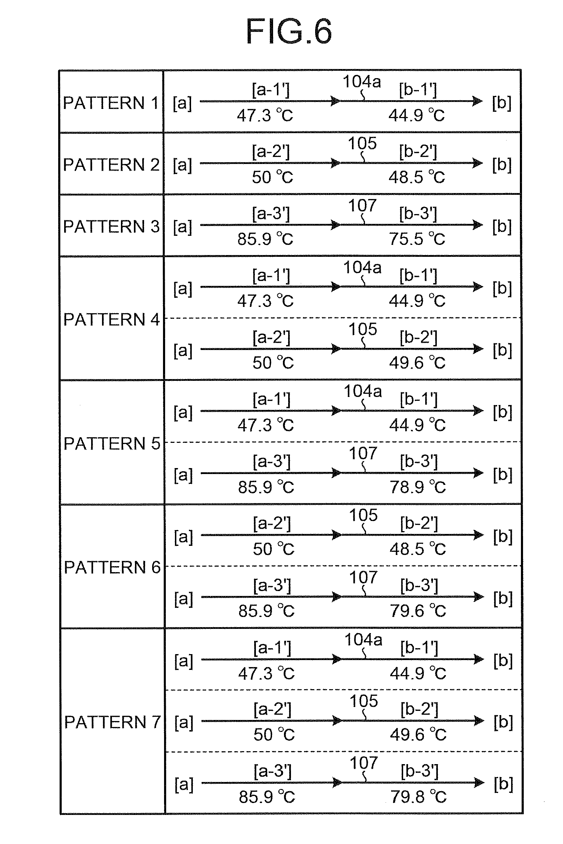

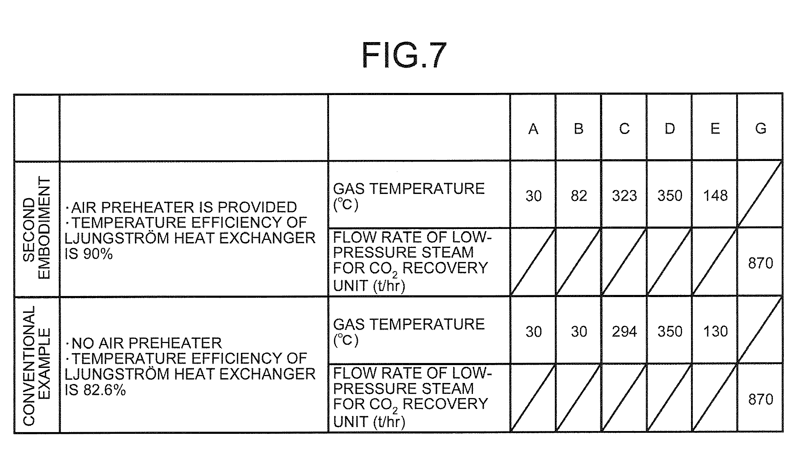

A second embodiment is explained with reference to the drawings. FIG. 5 is a schematic diagram of a heat recovery system of a CO₂ recovery unit according to the second embodiment. FIG. 6 is a chart of a pattern of the heat recovery system of a CO₂ recovery unit according to the second embodiment. FIG. 7 is a schematic diagram of an effect of the heat recovery system of a CO₂ recovery unit according to the second embodiment.

As in the heat recovery system of the first embodiment, the heat recovery system of the CO₂ recovery unit 55 according to the second embodiment includes the air preheater 58 that preheats the unburned air 102 before reaching the Ljungström heat exchanger 57 by exhaust heat from the CO₂ recovery unit 55, but the mode of exhaust heat in the CO₂ recovery unit 55 is different from that of the first embodiment. Therefore, in the second embodiment, exhaust heat from the CO₂ recovery unit 55 is explained, and elements equivalent to those in the first embodiment described above are denoted by like reference signs and explanations thereof will be omitted.

The heat recovery system that efficiently uses low-temperature exhaust heat discharged at the time of recovering CO₂ in the CO₂ recovery unit 55 is explained with reference to FIG. 5. The lean solution pipe 33d for supplying the lean solution 104a of the absorbent 104 from the regenerator 3 to the absorber 2 is provided between the rich-lean heat exchanger 4 and the cooler 33f via the air preheater 58.

The wash water pipe 22d in the flushing unit 22 of the absorber 2 is provided between the wash-water discharge pump 22e and the cooler 22f via the air preheater 58.

Furthermore, the condensed water pipe 37a in the CO₂ recovering unit 37 is provided between the regenerator 3 and the regenerator reflux condenser 37b via the air preheater 58.

All of the lean solution 104a of the absorbent 104 passing through the lean solution pipe 33d, the wash water 105 passing through the wash water pipe 22d, and the CO₂ gas 107 passing through the condensed water pipe 37a or at least one of these exhaust heat fluids is circulated from [a] to [b] of the CO₂ recovery unit 55 through the air preheater 58 shown in FIG. 1 of the power generation plant 50 and used for preheating the unburned air 102 before reaching the Ljungström heat exchanger 57.

Specifically, respective patterns in which all or at least one of the respective exhaust heat fluids (the lean solution 104a of the absorbent 104, the wash water 105, and the CO₂ gas 107) is used for preheating the unburned air 102 are explained with reference to FIGS. 1, 5, and 6.

In a pattern 1 shown in FIG. 6, the lean solution 104a of the absorbent 104 at a temperature of 47.3°C heat-exchanged by the rich-lean heat exchanger 4 is supplied from [a-1'] (corresponding to [a] shown in FIG. 1) to the air preheater 58. The lean solution 104a at a temperature of 44.9°C heat-exchanged via the air preheater 58 is returned to [b-1'] (corresponding to [b] shown in FIG. 1), cooled by the cooler 33f, and used for absorbing CO₂.

In a pattern 2 shown in FIG. 6, the wash water 105 at a temperature of 50°C heat-exchanged with the decarbonated flue gas 101a is supplied from [a-2'] (corresponding to [a] shown in FIG. 1) to the air preheater 58. The wash water 105 at a temperature of 48.5°C heat-exchanged via the air preheater 58 is returned to [b-2'] (corresponding to [b] shown in FIG. 1), cooled by the cooler 22f, and used for cleaning of the decarbonated flue gas 101a.

In a pattern 3 shown in FIG. 6, the CO₂ gas 107 at a temperature of 85.9°C, which has been removed from the rich solution 104b of the absorbent 104 by the endothermic reaction, is supplied from [a-3'] (corresponding to [a] shown in FIG. 1) to the air preheater 58. The CO₂ gas 107 at a temperature of 75.5°C heat-exchanged via the air preheater 58 is returned to [b-3'] (corresponding to [b] shown in FIG. 1), cooled by the regenerator reflux condenser 37b, and recovered.

A pattern 4 shown in FIG. 6 uses the pattern 1 and the pattern 2 in parallel, in which the lean solution 104a of the absorbent 104 at a temperature of 47.3°C is supplied from [a-1'] (corresponding to [a] shown in FIG. 1) to the air preheater 58, and the wash water 105 at a temperature of 50°C is supplied from [a-2'] (corresponding to [a] shown in FIG. 1) to the air preheater 58. The lean solution 104a at a temperature of 44.9°C heat-exchanged via the air preheater 58 is returned to [b-1'] (corresponding to [b] shown in FIG. 1), and the wash water 105 at a temperature of 49.6°C heat-exchanged via the air preheater 58 is returned to [b-2'] (corresponding to [b] shown in FIG. 1.

A pattern 5 shown in FIG. 6 uses the pattern 1 and the pattern 3 in parallel, in which the lean solution 104a of the absorbent 104 at a temperature of 47.3°C is supplied from [a-1'] (corresponding to [a] shown in FIG. 1) to the air preheater 58, and the CO₂ gas 107 at a temperature of 85.9°C is supplied from [a-3'] (corresponding to [a] shown in FIG. 1) to the air preheater 58. The lean solution 104a at a temperature of 44.9°C heat-exchanged via the air preheater 58 is returned to [b-1'] (corresponding to [b] shown in FIG. 1), and the CO₂ gas 107 at a temperature of 78.9°C heat-exchanged via the air preheater 58 is returned to [b-3'] (corresponding to [b] shown in FIG. 1).

A pattern 6 shown in FIG. 6 uses the pattern 2 and the pattern 3 in parallel, in which the wash water 105 at a temperature of 50°C is supplied from [a-2'] (corresponding to [a] shown in FIG. 1) to the air preheater 58, and the CO₂ gas 107 at a temperature of 85.9°C is supplied from [a-3'] (corresponding to [a] shown in FIG. 1) to the air preheater 58. The wash water 105 at a temperature of 48.5°C heat-exchanged via the air preheater 58 is returned to [b-2'] (corresponding to [b] shown in FIG. 1), and the CO₂ gas 107 at a temperature of 79.6°C heat-exchanged via the air preheater 58 is returned to [b-3'] (corresponding to [b] shown in FIG. 1).

A pattern 7 shown in FIG. 6 uses the pattern 1, the pattern 2 and the pattern 3 in parallel, in which the lean solution 104a of the absorbent 104 at a temperature of 47.3°C is supplied from [a-1'] (corresponding to [a] shown in FIG. 1) to the air preheater 58, the wash water 105 at a temperature of 50°C is supplied from [a-2'] (corresponding to [a] shown in FIG. 1) to the air preheater 58, and the CO₂ gas 107 at a temperature of 85.9°C is supplied from [a-3'] (corresponding to [a] shown in FIG. 1) to the air preheater 58. The lean solution 104a at a temperature of 44.9°C heat-exchanged via the air preheater 58 is returned to [b-1'] (corresponding to [b] shown in FIG. 1), the wash water 105 at a temperature of 49.6°C heat-exchanged via the air preheater 58 is returned to [b-2'] (corresponding to [b] shown in FIG. 1), and the CO₂ gas 107 at a temperature of 79.8°C heat-exchanged via the air preheater 58 is returned to [b-3'] (corresponding to [b] shown in FIG. 1).

In the heat recovery system of the CO₂ recovery unit 55 according to the present embodiment, an effect of a case where the air preheater 58 is provided, assuming the temperature efficiency of the Ljungström heat exchanger 57 to be 90%, and the pattern 7 shown in FIG. 6 is applied is explained below with reference to FIG. 7. As shown in FIG. 7, in the case of the gas temperature of the unburned air 102 being 30°C corresponding to the ambient air, the gas temperature of the unburned air 102 at the position A in the upstream of the air preheater 58 in FIG. 1 was 30°C, and the gas temperature of the preheated unburned air 102 at the position B in the upstream of the Ljungström heat exchanger 57 became 82°C by passing through the air preheater 58. The gas temperature of the heat-exchanged unburned air 102 at the position C in the upstream of the boiler 51 via the Ljungström heat exchanger 57 became 323°C. Furthermore, the gas temperature of the flue gas 101 at the position D in the upstream of the Ljungström heat exchanger 57 via the boiler 51 became 350°C. Furthermore, the gas temperature of the heat-exchanged flue gas 101 at the position E in the upstream of the flue gas desulfurizer 54 via the Ljungström heat exchanger 57 became 148°C. At this time, the flow rate G of the low-pressure steam 106 supplied to the regenerating heater 34 of the CO₂ recovery unit 55 was 870 t/hr.

On the other hand, an effect in the conventional case where the air preheater 58 is not provided and the temperature efficiency of the Ljungström heat exchanger 57 is 82.6% in the conventional case is as described below. As shown in FIG. 7, when the gas temperature of the unburned air 102 is 30°C corresponding to the ambient air, in FIG. 1, the gas temperature of the unburned air 102 at the position A is 30°C. Because the air preheater 58 is not provided, the gas temperature of the unburned air 102 at the position B in the upstream of the Ljungström heat exchanger 57 becomes 30°C. The gas temperature of the heat-exchanged unburned air 102 at the position C in the upstream of the boiler 51 via the Ljungström heat exchanger 57 became 294°C. Furthermore, the gas temperature of the flue gas 101 at the position D in the upstream of the Ljungström heat exchanger 57 via the boiler 51 became 350°C. Further, the gas temperature of the heat-exchanged flue gas 101 at the position E in the upstream of the flue gas desulfurizer 54 via the Ljungström heat exchanger 57 became 130°C. At this time, the flow rate G of the low-pressure steam 106 supplied to the regenerating heater 34 of the CO₂ recovery unit 55 was 870 t/hr.

In this manner, in the heat recovery system of the CO₂ recovery unit 55 according to the second embodiment, the air preheater 58 that preheats the unburned air 102 before reaching the Ljungström heat exchanger 57 by exhaust heat from the CO₂ recovery unit 55 is provided.

According to the heat recovery system of the CO₂ recovery unit 55, low-temperature exhaust heat equal to or lower than a temperature level of 70°C to 80°C discharged at the time of recovering CO₂ can be used efficiently. Specifically, as described above, the gas temperature of 294°C of the unburned air 102 at the position C supplied to the boiler 51 in the conventional case is raised by 29°C to be 323°C. A heat input to the boiler 51 increases due to the increase of 29°C, and effects equivalent to those of decreasing the flow rate of the low-pressure steam 106 consumed by the CO₂ recovery unit 55 by 58 t/hr can be acquired. The flow rate of 58 t/hr corresponds to 7% of the flow rate of the low-pressure steam 106 consumed by the CO₂ recovery unit 55. As a result, by preheating the unburned air 102 before reaching the Ljungström heat exchanger 57 by low-temperature exhaust heat equal to or lower than the temperature level of 70°C to 80°C discharged at the time of recovering CO₂, effects equivalent to those of decreasing the flow rate of the low-pressure steam 106 consumed by the CO₂ recovery unit 55 can be acquired.

Furthermore, because the Ljungström heat exchanger 57 performs heat exchange between the flue gas 101 containing sulfur content and the unburned air 102, the heat reservoir may be subjected to sulfuric acid corrosion due to dew condensation generated on the heat transfer surface of the heat reservoir. In this regard, according to the heat recovery system of the CO₂ recovery unit 55 of the second embodiment, the gas temperature of 30°C of the unburned air 102 at the position B on the inlet side of the Ljungström heat exchanger 57 in the conventional case is raised to 82°C, and the gas temperature of 130°C of the flue gas 101 at the position E on the outlet side of the Ljungström heat exchanger 57 in the conventional case is also raised to 148°C. As a result, an average cold-end temperature ((the gas temperature on the outlet side of flue gas + the gas temperature on the inlet side of unburned air)/2) of the Ljungström heat exchanger 57 increases from 80°C to 115°C by 35°C. Consequently, dew condensation on the heat transfer surface of the heat reservoir of the Ljungström heat exchanger 57 can be prevented and sulfuric acid corrosion of the heat reservoir can be suppressed.

The heat recovery system of the CO₂ recovery unit 55 according to the second embodiment is applied to the power generation plant 50 that drives the steam turbine 52 by the superheated steam 100 from the boiler 51 to generate power by the power generator 53.

As described above, according to the heat recovery system of the CO₂ recovery unit 55, the gas temperature of 294°C of the unburned air 102 at the position C supplied to the boiler 51 in the conventional case is raised by 29°C to be 323°C. Therefore, because the flow rate of the superheated steam 100 supplied from the boiler 51 to the steam turbine 52 increases, the power generation efficiency of the power generation plant 50 can be improved.

In the heat recovery system of the CO₂ recovery unit 55 according to the second embodiment, the air preheater 58 circulates all or at least one of the respective exhaust heat fluids (the lean solution 104a of the absorbent 104, the wash water 105, and the CO₂ gas 107) from the CO₂ recovery unit 55, thereby directly heating the unburned air 102.

According to the heat recovery system of the CO₂ recovery unit 55, the heat transfer efficiency can be improved with respect to the case where the unburned air 102 is indirectly heated via the heat medium.

A heat recovery method of the CO₂ recovery unit 55 according to the second embodiment includes a step of removing CO₂ in the flue gas 101 discharged from the boiler 51 by absorbing CO₂ by the absorbent 104, emitting CO₂ from the absorbent 104 having absorbed CO₂, and of reusing the absorbent 104 for absorbing CO₂ (CO₂ recovery step). The heat recovery method further includes a step of performing heat exchange between the flue gas 101 discharged from the boiler 51 and before reaching the CO₂ recovery step and the unburned air 102 supplied to the boiler 51 (heat exchanging step), and a step of preheating the unburned air 102 before reaching the heat exchanging step by exhaust heat from the CO₂ recovery step (air preheating step).

According to the heat recovery method of the CO₂ recovery unit 55, low-temperature exhaust heat equal to or lower than the temperature level of 70°C to 80°C discharged at the time of recovering CO₂ can be used efficiently. Specifically, the gas temperature of 294°C of the unburned air 102 at the position C supplied to the boiler 51 in the conventional case is raised by 29°C to be 323°C. A heat input to the boiler 51 increases due to the increase of 29°C, and effects equivalent to those of decreasing the flow rate of the low-pressure steam 106 consumed at the CO₂ recovery step by 58 t/hr can be acquired. The flow rate of 58 t/hr corresponds to 7% of the flow rate of the low-pressure steam 106 consumed at the CO₂ recovery step. As a result, by preheating the unburned air 102 before reaching the heat exchanging step by low-temperature exhaust heat equal to or lower than the temperature level of 70°C to 80°C discharged at the time of recovering CO₂, effects equivalent to those of decreasing the flow rate of the low-pressure steam 106 consumed at the CO₂ recovery step can be acquired.

Furthermore, because heat exchange between the flue gas 101 containing sulfur content and the unburned air 102 is performed at the heat exchanging step, the heat reservoir may be subjected to sulfuric acid corrosion due to dew condensation generated on the heat transfer surface of the heat reservoir. In this regard, according to the heat recovery method of the CO₂ recovery unit 55 of the second embodiment, the gas temperature of 30°C of the unburned air 102 at the position B on the inlet side of the heat exchanging step in the conventional case is raised to 82°C, and the gas temperature of 130°C of the flue gas 101 at the position E on the outlet side of the heat exchanging step in the conventional case is also raised to 148°C. As a result, an average cold-end temperature ((the gas temperature on the outlet side of flue gas + the gas temperature on the inlet side of unburned air)/2) at the heat exchanging step is increased from 80°C to 115°C by 35°C. Consequently, dew condensation on the heat transfer surface of the heat reservoir at the heat exchanging step can be prevented and sulfuric acid corrosion of the heat reservoir can be suppressed.

The heat recovery method of the CO₂ recovery unit 55 according to the second embodiment further includes a step of driving the steam turbine 52 by the superheated steam 100 from the boiler 51 to generate power by the power generator 53 (power generation step).

According to the heat recovery method of the CO₂ recovery unit 55, the gas temperature of 294°C of the unburned air 102 at the position C supplied to the boiler 51 in the conventional case is raised by 29°C to be 323°C. Therefore, because the flow rate of the superheated steam 100 supplied from the boiler 51 to the steam turbine 52 increases, the power generation efficiency of the power generation plant 50 can be improved.

### [Third embodiment]

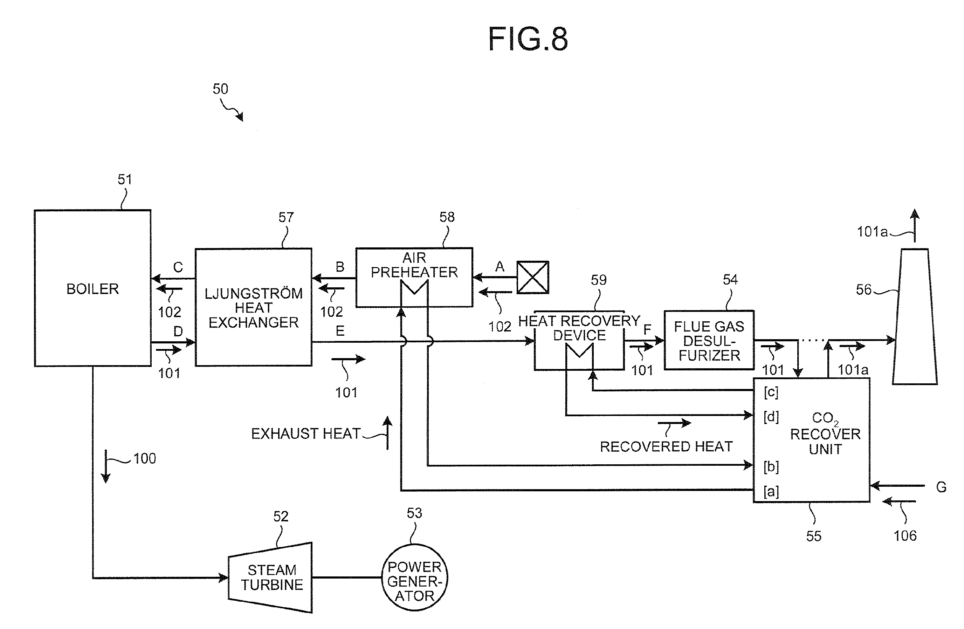

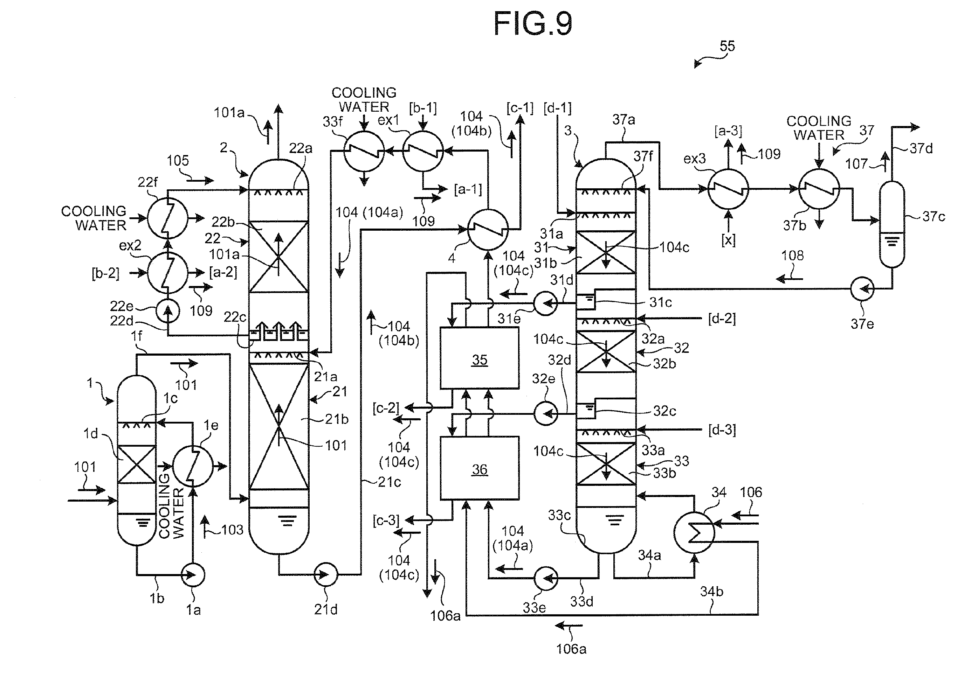

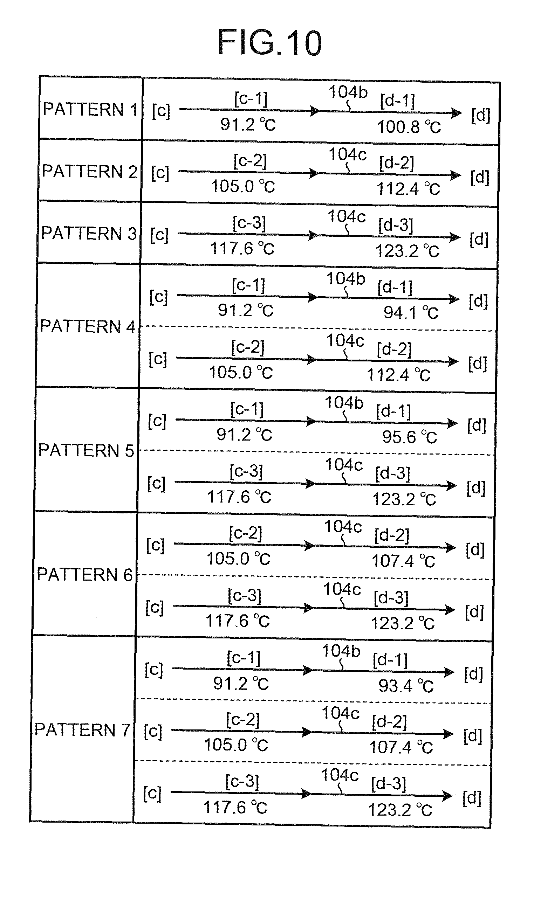

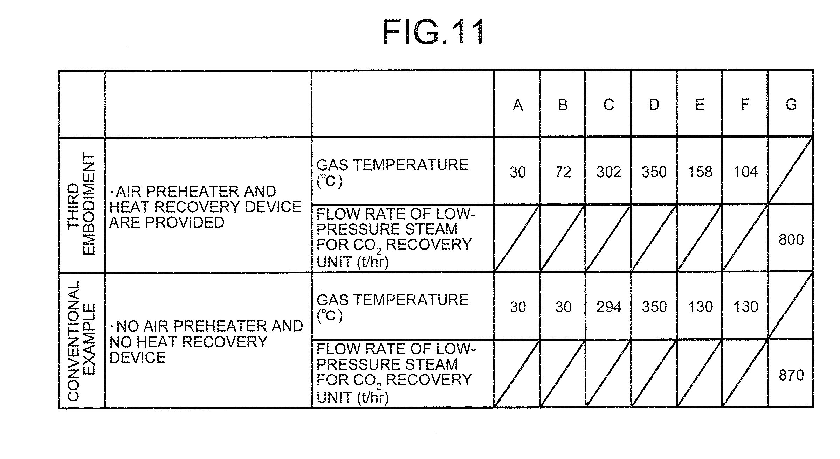

A third embodiment is explained with reference to the drawings. FIG. 8 is a schematic diagram of a power generation plant to which a heat recovery system of a CO₂ recovery unit according to the third embodiment is applied. FIG. 9 is a schematic diagram of the heat recovery system of a CO₂ recovery unit according to the third embodiment. FIG. 10 is a chart of a pattern of the heat recovery system of a CO₂ recovery unit according to the third embodiment. FIG. 11 is a schematic diagram of an effect of the heat recovery system of a CO₂ recovery unit according to the third embodiment.

The heat recovery system of the CO₂ recovery unit 55 according to the third embodiment includes, as shown in FIG. 8, a heat recovery device 59 that recovers the heat of the flue gas 101 before reaching the CO₂ recovery unit 55 via the Ljungström heat exchanger 57 and supplies the heat to the CO₂ recovery unit 55 in addition to the heat recovery system of the first embodiment. Therefore, in the third embodiment, heat recovery from the heat recovery device 59 to the CO₂ recovery unit 55 is explained, and elements equivalent to those in the first embodiment described above are denoted by like reference signs and explanations thereof will be omitted.

Supply of recovered heat to the CO₂ recovery unit 55 is explained with reference to FIG. 9. As shown in FIG. 9, the rich solution pipe 21c for supplying the rich solution 104b of the absorbent 104 from the absorber 2 to the regenerator 3 is provided between the rich-lean heat exchanger 4 and the nozzle 31a of the regenerator 3 via the heat recovery device 59.

The semi-lean-solution extracting pipe 31d in the regenerator 3 is provided between the lean-solution/steam-drain heat recovery unit 35 and the nozzle 32a via the heat recovery device 59.

The semi-lean-solution extracting pipe 32d in the regenerator 3 is provided between the lean-solution/steam-drain heat recovery unit 36 and the nozzle 33a via the heat recovery device 59.

All or at least one of the exhaust heat fluids of the rich solution 104b of the absorbent 104 passing through the rich solution pipe 21c, the semi-lean solution 104c passing through the semi-lean-solution extracting pipe 31d, and the semi-lean solution 104c passing through the semi-lean-solution extracting pipe 32d is circulated from [c] to [d] of the CO₂ recovery unit 55 via the heat recovery device 59 of the power generation plant 50 shown in FIG. 8, and used for recovering the heat of the flue gas 101 before reaching the CO₂ recovery unit 55 via the Ljungström heat exchanger 57.

Specifically, respective patterns in which all or at least one of the respective exhaust heat fluids (the rich solution 104b and the semi-lean solution 104c of the absorbent 104, the wash water 105, and the CO₂ gas 107) is used for recovering the heat of the flue gas 101 are explained with reference to FIGS. 8 to 10.

In a pattern 1 shown in FIG. 10, the rich solution 104b of the absorbent 104 at a temperature of 91.2°C heat-exchanged by the rich-lean heat exchanger 4 is supplied from [c-1] (corresponding to [c] shown in FIG. 8) to the heat recovery device 59. The rich solution 104b at a temperature of 100.8°C heat-recovered via the heat recovery device 59 is returned to [d-1] (corresponding to [d] shown in FIG. 8), caused to flow down from the nozzle 31a into the regenerator 3, thereby reacting endothermically.

In a pattern 2 shown in FIG. 10, the semi-lean solution 104c of the absorbent 104 at a temperature of 105.0°C heat-recovered by the lean-solution/steam-drain heat recovery unit 35 is supplied from [c-2] (corresponding to [c] shown in FIG. 8) to the heat recovery device 59. The semi-lean solution 104c at a temperature of 112.4°C heat-recovered via the heat recovery device 59 is returned to [d-2] (corresponding to [d] shown in FIG. 8), caused to flow down from the nozzle 32a into the regenerator 3, thereby reacting endothermically.

In a pattern 3 shown in FIG. 10, the semi-lean solution 104c of the absorbent 104 at a temperature of 117.6°C heat-recovered by the lean-solution/steam-drain heat recovery unit 36 is supplied from [c-3] (corresponding to [c] shown in FIG. 8) to the heat recovery device 59. The semi-lean solution 104c at a temperature of 123.2°C heat-recovered via the heat recovery device 59 is returned to [d-3] (corresponding to [d] shown in FIG. 8), caused to flow down from the nozzle 33a into the regenerator 3, thereby reacting endothermically.

A pattern 4 shown in FIG. 10 uses the pattern 1 and the pattern 2 in parallel, in which the rich solution 104b of the absorbent 104 at a temperature of 91.2°C is supplied from [c-1] (corresponding to [c] shown in FIG. 8) to the heat recovery device 59, and the semi-lean solution 104c of the absorbent 104 at a temperature of 105.0°C is supplied from [c-2] (corresponding to [c] shown in FIG. 8) to the heat recovery device 59. The rich solution 104b at a temperature of 94.1°C heat-recovered via the heat recovery device 59 is returned to [d-1] (corresponding to [d] shown in FIG. 8), and the semi-lean solution 104c at a temperature of 112.4°C heat-recovered via the heat recovery device 59 is returned to [d-2] (corresponding to [d] shown in FIG. 8).

A pattern 5 shown in FIG. 10 uses the pattern 1 and the pattern 3 in parallel, in which the rich solution 104b of the absorbent 104 at a temperature of 91.2°C is supplied from [c-1] (corresponding to [c] shown in FIG. 8) to the heat recovery device 59, and the semi-lean solution 104c of the absorbent 104 at a temperature of 117.6°C is supplied from [c-3] (corresponding to [c] shown in FIG. 8) to the heat recovery device 59. The rich solution 104b at a temperature of 95.6°C heat-recovered via the heat recovery device 59 is returned to [d-1] (corresponding to [d] shown in FIG. 8), and the semi-lean solution 104c at a temperature of 123.2°C heat-recovered via the heat recovery device 59 is returned to [d-3] (corresponding to [d] shown in FIG. 8).

A pattern 6 shown in FIG. 10 uses the pattern 2 and the pattern 3 in parallel, in which the semi-lean solution 104c of the absorbent 104 at a temperature of 105.0°C is supplied from [c-2] (corresponding to [c] shown in FIG. 8) to the heat recovery device 59, and the semi-lean solution 104c of the absorbent 104 at a temperature of 117.6°C is supplied from [c-3] (corresponding to [c] shown in FIG. 8) to the heat recovery device 59. The semi-lean solution 104c at a temperature of 107.4°C heat-recovered via the heat recovery device 59 is returned to [d-2] (corresponding to [d] shown in FIG. 8), and the semi-lean solution 104c at a temperature of 123.2°C heat-recovered via the heat recovery device 59 is returned to [d-3] (corresponding to [d] shown in FIG. 8).

A pattern 7 shown in FIG. 10 uses the pattern 1, the pattern 2 and the pattern 3 in parallel, in which the rich solution 104b of the absorbent 104 at a temperature of 91.2°C is supplied from [c-1] (corresponding to [c] shown in FIG. 8) to the heat recovery device 59, the semi-lean solution 104c of the absorbent 104 at a temperature of 105.0°C is supplied from [c-2] (corresponding to [c] shown in FIG. 8) to the heat recovery device 59, and the semi-lean solution 104c of the absorbent 104 at a temperature of 117.6°C is supplied from [c-3] (corresponding to [c] shown in FIG. 8) to the heat recovery device 59. The rich solution 104b at a temperature of 93.4°C heat-recovered via the heat recovery device 59 is returned to [d-1] (corresponding to [d] shown in FIG. 8), the semi-lean solution 104c at a temperature of 107.4°C heat-recovered via the heat recovery device 59 is returned to [d-2] (corresponding to [d] shown in FIG. 8), and the semi-lean solution 104c at a temperature of 123.2°C heat-recovered via the heat recovery device 59 is returned to [d-3] (corresponding to [d] shown in FIG. 8).

In the heat recovery system of the CO₂ recovery unit 55 according to the present embodiment, an effect of a case where the air preheater 58 and the heat recovery device 59 are provided and the pattern 7 shown in FIG. 10 is applied is explained below with reference to FIG. 11.
As shown in FIG. 11, in the case of the gas temperature of the unburned air 102 being 30°C corresponding to the ambient air, the gas temperature of the unburned air 102 at the position A in the upstream of the air preheater 58 in FIG. 8 was 30°C, and the gas temperature of the preheated unburned air 102 at the position B in the upstream of the Ljungström heat exchanger 57 became 72°C by passing through the air preheater 58. The gas temperature of the heat-exchanged unburned air 102 at the position C in the upstream of the boiler 51 via the Ljungström heat exchanger 57 became 302°C. Furthermore, the gas temperature of the flue gas 101 at the position D in the upstream of the Ljungström heat exchanger 57 via the boiler 51 became 350°C. Further, the gas temperature of the heat-exchanged flue gas 101 at the position E in the upstream of the heat recovery device 59 via the Ljungström heat exchanger 57 became 158°C. Further, the gas temperature of the heat-recovered flue gas 101 at a position F in the upstream of the flue gas desulfurizer 54 via the heat recovery device 59 became 104°C. At this time, the flow rate G of the low-pressure steam 106 supplied to the regenerating heater 34 of the CO₂ recovery unit 55 was 800 t/hr.

On the other hand, an effect in the conventional case where the air preheater 58 and the heat recovery device 59 are not provided is as described below. As shown in FIG. 11, when the gas temperature of the unburned air 102 is 30°C corresponding to the ambient air, in FIG. 8, the gas temperature of the unburned air 102 at the position A is 30°C. Because the air preheater 58 is not provided, the gas temperature of the unburned air 102 at the position B in the upstream of the Ljungström heat exchanger 57 becomes 30°C. The gas temperature of the heat-exchanged unburned air 102 at the position C in the upstream of the boiler 51 via the Ljungström heat exchanger 57 became 294°C. Furthermore, the gas temperature of the flue gas 101 at the position D in the upstream of the Ljungström heat exchanger 57 via the boiler 51 became 350°C. Furthermore, the gas temperature of the heat-exchanged flue gas 101 at the position E in the upstream of the flue gas desulfurizer 54 via the Ljungström heat exchanger 57 became 130°C. Because the heat recovery device 59 is not provided, the gas temperature of the flue gas 101 corresponding to the position F is 130°C. At this time, the flow rate G of the low-pressure steam 106 supplied to the regenerating heater 34 of the CO₂ recovery unit 55 was 870 t/hr.

In this manner, in the heat recovery system of the CO₂ recovery unit 55 according to the third embodiment, the heat recovery device 59 that recovers the heat of the flue gas 101 before reaching the CO₂ recovery unit 55 via the Ljungström heat exchanger 57 and supplies the heat to the CO₂ recovery unit 55 is further provided, with respect to the heat recovery system of the first embodiment.

According to the heat recovery system of the CO₂ recovery unit 55, recovered heat can be effectively used, while effectively using low-temperature exhaust heat equal to or lower than a temperature level of 70°C to 80°C discharged at the time of recovering CO₂. Specifically, as described above, the gas temperature of 294°C of the unburned air 102 at the position C supplied to the boiler 51 in the conventional case is raised by 8°C to be 302°C. A heat input to the boiler 51 increases due to the increase of 8°C, and effects equivalent to those of decreasing the flow rate of the low-pressure steam 106 consumed by the CO₂ recovery unit 55 by 15 t/hr can be acquired. The flow rate of 15 t/hr corresponds to 1.7% of the flow rate of the low-pressure steam 106 consumed by the CO₂ recovery unit 55. Furthermore, the flow rate of 870 t/hr of the low-pressure steam 106 supplied to the regenerating heater 34 of the CO₂ recovery unit 55 in the conventional case is decreased to 800 t/hr by 70 t/hr. The flow rate of 70 t/hr corresponds to 8% of the flow rate of the low-pressure steam 106 consumed by the CO₂ recovery unit 55. That is, the flow rate of the low-pressure steam 106 consumed by the CO₂ recovery unit 55 is decreased by 9.7% in total. As a result, by recovering the heat of the flue gas 101 after passing through the Ljungström heat exchanger 57 while preheating the unburned air 102 before reaching the Ljungström heat exchanger 57 by low-temperature exhaust heat equal to or lower than the temperature level of 70°C to 80°C discharged at the time of recovering CO₂, the flow rate of the low-pressure steam 106 consumed by the CO₂ recovery unit 55 can be decreased.

Furthermore, because the Ljungström heat exchanger 57 performs heat exchange between the flue gas 101 containing sulfur content and the unburned air 102, the heat reservoir may be subjected to sulfuric acid corrosion due to dew condensation generated on the heat transfer surface of the heat reservoir. In this regard, according to the heat recovery system of the CO₂ recovery unit 55 of the third embodiment, the gas temperature of 30°C of the unburned air 102 at the position B on the inlet side of the Ljungström heat exchanger 57 in the conventional case is raised to 72°C, and the gas temperature of 130°C of the flue gas 101 at the position E on the outlet side of the Ljungström heat exchanger 57 in the conventional case is also raised to 158°C. As a result, an average cold-end temperature ((the gas temperature on the outlet side of flue gas + the gas temperature on the inlet side of unburned air)/2) of the Ljungström heat exchanger 57 increases from 80°C to 115°C by 35°C. Consequently, dew condensation on the heat transfer surface of the heat reservoir of the Ljungström heat exchanger 57 can be prevented and sulfuric acid corrosion of the heat reservoir can be suppressed.

The heat recovery system of the CO₂ recovery unit 55 according to the third embodiment is applied to the power generation plant 50 that drives the steam turbine 52 by the superheated steam 100 from the boiler 51 to generate power by the power generator 53.

As described above, according to the heat recovery system of the CO₂ recovery unit 55, the gas temperature of 294°C of the unburned air 102 at the position C supplied to the boiler 51 in the conventional case is raised by 8°C to be 302°C. Therefore, because the flow rate of the superheated steam 100 supplied from the boiler 51 to the steam turbine 52 increases, the power generation efficiency of the power generation plant 50 can be improved.

A heat recovery method of the CO₂ recovery unit 55 according to the third embodiment further includes a step of recovering the heat of the flue gas 101 before reaching the CO₂ recovery step through the heat exchanging step, and of supplying the heat to the CO₂ recovery step (heat recovery step), with respect to the heat recovery method of the first embodiment.

According to the heat recovery method of the CO₂ recovery unit 55, low-temperature exhaust heat equal to or lower than the temperature level of 70°C to 80°C discharged at the time of recovering CO₂ can be used efficiently. Specifically, the gas temperature of 294°C of the unburned air 102 at the position C supplied to the boiler 51 in the conventional case is raised by 8°C to be 302°C. A heat input to the boiler 51 increases due to the increase of 8°C, and effects equivalent to those of decreasing the flow rate of the low-pressure steam 106 consumed at the CO₂ recovery step by 15 t/hr can be acquired. The flow rate of 15 t/hr corresponds to 1.7% of the flow rate of the low-pressure steam 106 consumed at the CO₂ recovery step. Furthermore, the flow rate of 870 t/hr of the low-pressure steam 106 supplied to the CO₂ recovery step in the conventional case is decreased to 800 t/hr by 70 t/hr. The flow rate of 70 t/hr corresponds to 8% of the flow rate of the low-pressure steam 106 consumed at the CO₂ recovery step. That is, the flow rate of the low-pressure steam 106 consumed at the CO₂ recovery step is decreased by 9.7% in total. As a result, by recovering the heat of the flue gas 101 after passing through the heat exchanging step while preheating the unburned air 102 before reaching the heat exchanging step by low-temperature exhaust heat equal to or lower than the temperature level of 70°C to 80°C discharged at the time of recovering CO₂, the flow rate of the low-pressure steam 106 consumed at the CO₂ recovery step can be decreased.

Furthermore, because heat exchange between the flue gas 101 containing sulfur content and the unburned air 102 is performed at the heat exchanging step, the heat reservoir may be subjected to sulfuric acid corrosion due to dew condensation generated on the heat transfer surface of the heat reservoir. In this regard, according to the heat recovery method of the CO₂ recovery unit 55 of the third embodiment, the gas temperature of 30°C of the unburned air 102 at the position B on the inlet side of the heat exchanging step in the conventional case is raised to 72°C, and the gas temperature of 130°C of the flue gas 101 at the position E on the outlet side of the heat exchanging step in the conventional case is also raised to 158°C. As a result, an average cold-end temperature ((the gas temperature on the outlet side of flue gas + the gas temperature on the inlet side of unburned air)/2) at the heat exchanging step is increased from 80°C to 115°C by 35°C. Consequently, dew condensation on the heat transfer surface of the heat reservoir at the heat exchanging step can be prevented and sulfuric acid corrosion of the heat reservoir can be suppressed.

The heat recovery method of the CO₂ recovery unit 55 according to the third embodiment further includes a power generation step of driving the steam turbine 52 by the superheated steam 100 from the boiler 51 to generate power by the power generator 53.

According to the heat recovery method of the CO₂ recovery unit 55, the gas temperature of 294°C of the unburned air 102 at the position C supplied to the boiler 51 in the conventional case is raised by 8°C to be 302°C. Therefore, because the flow rate of the superheated steam 100 supplied from the boiler 51 to the steam turbine 52 increases, the power generation efficiency of the power generation plant 50 can be improved.

In the configuration described above, the regenerator 3 includes three stages, which are an upper stage, a middle stage, and a lower stage. That is, these are the upper regenerating unit 31, the middle regenerating unit 32, and the lower regenerating unit 33. However, the regenerator 3 can include two stages, which are upper and lower stages. That is, these are the upper regenerating unit 31 and the lower regenerating unit 33. In this case, the semi-lean-solution extracting pipe 31d in the regenerator 3 is provided between the lean-solution/steam-drain heat recovery unit 35 and the nozzle 32a via the heat recovery device 59, and the pattern 2 and patterns including the pattern 2 shown in FIG. 10 are deleted. Furthermore, the regenerator 3 is not limited to the upper, middle, and lower stages, which are the upper regenerating unit 31, the middle regenerating unit 32, and the lower regenerating unit 33, and can include three or more regenerating units. In this case, a pattern for an increased stage and patterns including this pattern are added.

### [Fourth Embodiment]

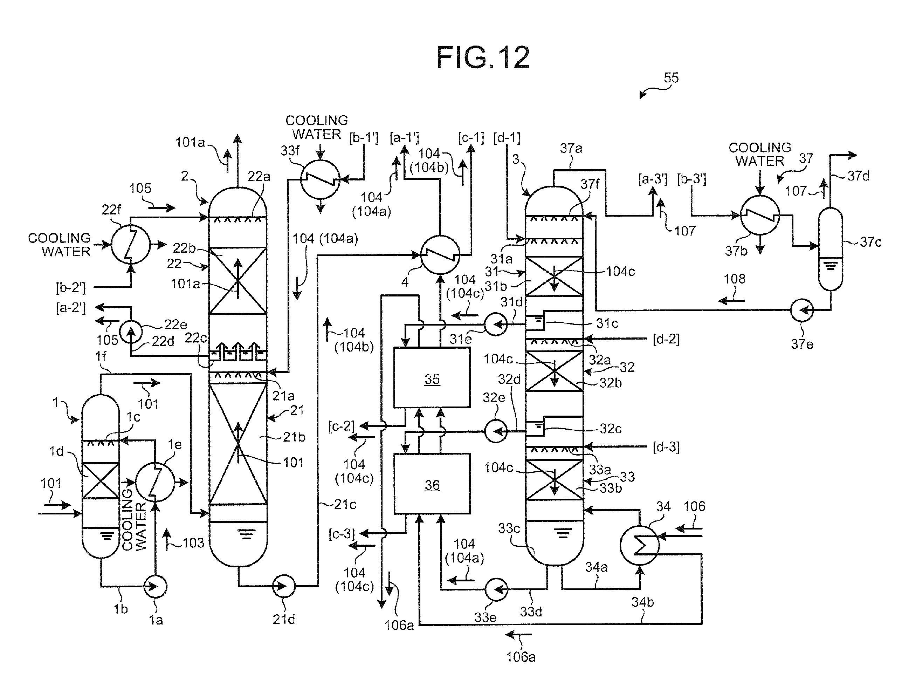

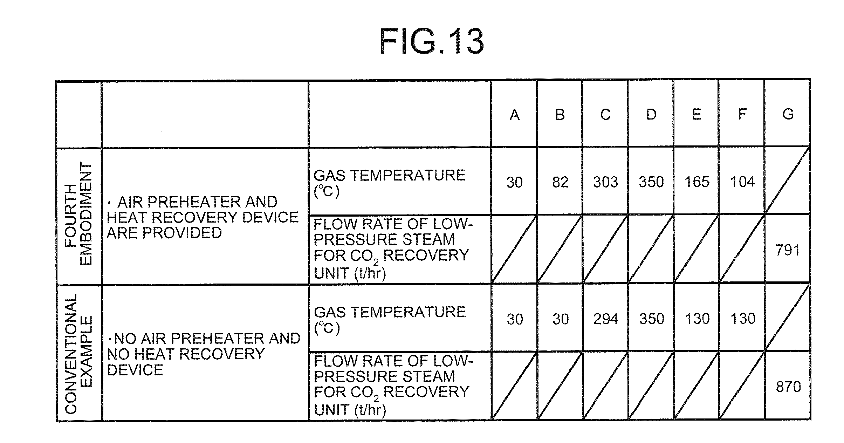

A fourth embodiment is explained with reference to the drawings. FIG. 12 is a schematic diagram of a heat recovery system of a CO₂ recovery unit according to the fourth embodiment. FIG. 13 is a schematic diagram of an effect of the heat recovery system of a CO₂ recovery unit according to the fourth embodiment.

The heat recovery system of the CO₂ recovery unit 55 according to the fourth embodiment further includes, as shown in FIGS. 8 and 12, the heat recovery device 59 that recovers the heat of the flue gas 101 before reaching the CO₂ recovery unit 55 via the Ljungström heat exchanger 57 and supplies the heat to the CO₂ recovery unit 55 in addition to the heat recovery system of the second embodiment. Furthermore, heat recovery from the heat recovery device 59 to the CO₂ recovery unit 55 in the fourth embodiment is identical to that of the third embodiment described above. Therefore, in the fourth embodiment, explanations of heat recovery will be omitted because it has been explained in the second and third embodiments described above.

In the heat recovery system of the CO₂ recovery unit 55 according to the present embodiment, an effect of a case where the air preheater 58 and the heat recovery device 59 are provided and the pattern 7 shown in FIG. 10 is applied is explained below with reference to FIG. 13. As shown in FIG. 13, in the case of the gas temperature of the unburned air 102 being 30°C corresponding to the ambient air, the gas temperature of the unburned air 102 at the position A in the upstream of the air preheater 58 in FIG. 8 was 30°C, and the gas temperature of the preheated unburned air 102 at the position B in the upstream of the Ljungström heat exchanger 57 became 82°C by passing through the air preheater 58. The gas temperature of the heat-exchanged unburned air 102 at the position C in the upstream of the boiler 51 via the Ljungström heat exchanger 57 became 303°C. Furthermore, the gas temperature of the flue gas 101 at the position D in the upstream of the Ljungström heat exchanger 57 via the boiler 51 became 350°C. Further, the gas temperature of the heat-exchanged flue gas 101 at the position E in the upstream of the heat recovery device 59 via the Ljungström heat exchanger 57 became 165°C. Further, the gas temperature of the heat-recovered flue gas 101 at the position F in the upstream of the flue gas desulfurizer 54 via the heat recovery device 59 became 104°C. At this time, the flow rate G of the low-pressure steam 106 supplied to the regenerating heater 34 of the CO₂ recovery unit 55 was 791 t/hr.

On the other hand, an effect in the conventional case where the air preheater 58 and the heat recovery device 59 are not provided is as described below. As shown in FIG. 13, when the gas temperature of the unburned air 102 is 30°C corresponding to the ambient air, in FIG. 8, the gas temperature of the unburned air 102 at the position A is 30°C. Because the air preheater 58 is not provided, the gas temperature of the unburned air 102 at the position B in the upstream of the Ljungström heat exchanger 57 becomes 30°C. The gas temperature of the heat-exchanged unburned air 102 at the position C in the upstream of the boiler 51 via the Ljungström heat exchanger 57 became 294°C. Furthermore, the gas temperature of the flue gas 101 at the position D in the upstream of the Ljungström heat exchanger 57 via the boiler 51 became 350°C. Furthermore, the gas temperature of the heat-exchanged flue gas 101 at the position E in the upstream of the flue gas desulfurizer 54 via the Ljungström heat exchanger 57 became 130°C. Because the heat recovery device 59 is not provided, the gas temperature of the flue gas 101 corresponding to the position F is 130°C. At this time, the flow rate G of the low-pressure steam 106 supplied to the regenerating heater 34 of the CO₂ recovery unit 55 was 870 t/hr.

In this manner, in the heat recovery system of the CO₂ recovery unit 55 according to the fourth embodiment, the heat recovery device 59 that recovers the heat of the flue gas 101 before reaching the CO₂ recovery unit 55 via the Ljungström heat exchanger 57 and supplies the heat to the CO₂ recovery unit 55 is further provided, with respect to the heat recovery system of the second embodiment.

According to the heat recovery system of the CO₂ recovery unit 55, recovered heat can be effectively used, while effectively using low-temperature exhaust heat equal to or lower than a temperature level of 70°C to 80°C discharged at the time of recovering CO₂. Specifically, as described above, the gas temperature of 294°C of the unburned air 102 at the position C supplied to the boiler 51 in the conventional case is raised by 9°C to be 303°C.
A heat input to the boiler 51 increases due to the increase of 9°C, and effects equivalent to those of decreasing the flow rate of the low-pressure steam 106 consumed by the CO₂ recovery unit 55 by 17 t/hr can be acquired. The flow rate of 17 t/hr corresponds to 2% of the flow rate of the low-pressure steam 106 consumed by the CO₂ recovery unit 55. Furthermore, the flow rate of 870 t/hr of the low-pressure steam 106 supplied to the regenerating heater 34 of the CO₂ recovery unit 55 in the conventional case is decreased to 791 t/hr by 79 t/hr. The flow rate of 79 t/hr corresponds to 9.1% of the flow rate of the low-pressure steam 106 consumed by the CO₂ recovery unit 55. That is, the flow rate of the low-pressure steam 106 consumed by the CO₂ recovery unit 55 is decreased by 11.1% in total. As a result, by recovering the heat of the flue gas 101 after passing through the Ljungström heat exchanger 57 while preheating the unburned air 102 before reaching the Ljungström heat exchanger 57 by low-temperature exhaust heat equal to or lower than the temperature level of 70°C to 80°C discharged at the time of recovering CO₂, the flow rate of the low-pressure steam 106 consumed by the CO₂ recovery unit 55 can be decreased.

Furthermore, because the Ljungström heat exchanger 57 performs heat exchange between the flue gas 101 containing sulfur content and the unburned air 102, the heat reservoir may be subjected to sulfuric acid corrosion due to dew condensation generated on the heat transfer surface of the heat reservoir. In this regard, according to the heat recovery system of the CO₂ recovery unit 55 of the fourth embodiment, the gas temperature of 30°C of the unburned air 102 at the position B on the inlet side of the Ljungström heat exchanger 57 in the conventional case is raised to 82°C, and the gas temperature of 130°C of the flue gas 101 at the position E on the outlet side of the Ljungström heat exchanger 57 in the conventional case is also raised to 165°C. As a result, an average cold-end temperature ((the gas temperature on the outlet side of flue gas + the gas temperature on the inlet side of unburned air)/2) of the Ljungström heat exchanger 57 increases from 80°C to 123.5°C by 43.5°C. Consequently, dew condensation on the heat transfer surface of the heat reservoir of the Ljungström heat exchanger 57 can be prevented and sulfuric acid corrosion of the heat reservoir can be suppressed.

The heat recovery system of the CO₂ recovery unit 55 according to the fourth embodiment is applied to the power generation plant 50 that drives the steam turbine 52 by the superheated steam 100 from the boiler 51 to generate power by the power generator 53.

As described above, according to the heat recovery system of the CO₂ recovery unit 55, the gas temperature of 294°C of the unburned air 102 at the position C supplied to the boiler 51 in the conventional case is raised by 9°C to be 303°C. Therefore, because the flow rate of the superheated steam 100 supplied from the boiler 51 to the steam turbine 52 increases, the power generation efficiency of the power generation plant 50 can be improved.

A heat recovery method of the CO₂ recovery unit 55 according to the fourth embodiment further includes a step of recovering the heat of the flue gas 101 before reaching the CO₂ recovery step through the heat exchanging step, and of supplying the heat to the CO₂ recovery step (heat recovery step), with respect to the heat recovery method of the first embodiment.

According to the heat recovery method of the CO₂ recovery unit 55, low-temperature exhaust heat equal to or lower than the temperature level of 70°C to 80°C discharged at the time of recovering CO₂ can be used efficiently. Specifically, the gas temperature of 294°C of the unburned air 102 at the position C supplied to the boiler 51 in the conventional case is raised by 9°C to be 303°C. A heat input to the boiler 51 increases due to the increase of 9°C, and effects equivalent to those of decreasing the flow rate of the low-pressure steam 106 consumed at the CO₂ recovery step by 17 t/hr can be acquired. The flow rate of 17 t/hr corresponds to 2% of the flow rate of the low-pressure steam 106 consumed at the CO₂ recovery step. Furthermore, the flow rate of 870 t/hr of the low-pressure steam 106 supplied to the CO₂ recovery step in the conventional case is decreased to 791 t/hr by 79 t/hr. The flow rate of 79 t/hr corresponds to 9.1% of the flow rate of the low-pressure steam 106 consumed at the CO₂ recovery step. That is, the flow rate of the low-pressure steam 106 consumed at the CO₂ recovery step is decreased by 11.1% in total. As a result, by recovering the heat of the flue gas 101 after passing through the heat exchanging step while preheating the unburned air 102 before reaching the heat exchanging step by low-temperature exhaust heat equal to or lower than the temperature level of 70°C to 80°C discharged at the time of recovering CO₂, the flow rate of the low-pressure steam 106 consumed at the CO₂ recovery step can be decreased.

Furthermore, because heat exchange between the flue gas 101 containing sulfur content and the unburned air 102 is performed at the heat exchanging step, the heat reservoir may be subjected to sulfuric acid corrosion due to dew condensation generated on the heat transfer surface of the heat reservoir. In this regard, according to the heat recovery method of the CO₂ recovery unit 55 of the fourth embodiment, the gas temperature of 30°C of the unburned air 102 at the position B on the inlet side of the heat exchanging step in the conventional case is raised to 82°C, and the gas temperature of 130°C of the flue gas 101 at the position E on the outlet side of the heat exchanging step in the conventional case is also raised to 165°C. As a result, an average cold-end temperature ((the gas temperature on the outlet side of flue gas + the gas temperature on the inlet side of unburned air)/2) at the heat exchanging step is increased from 80°C to 123.5°C by 43.5°C. Consequently, dew condensation on the heat transfer surface of the heat reservoir at the heat exchanging step can be prevented and sulfuric acid corrosion of the heat reservoir can be suppressed.

The heat recovery method of the CO₂ recovery unit 55 according to the fourth embodiment further includes a power generation step of driving the steam turbine 52 by the superheated steam 100 from the boiler 51 to generate power by the power generator 53.

According to the heat recovery method of the CO₂ recovery unit 55, the gas temperature of 294°C of the unburned air 102 at the position C supplied to the boiler 51 in the conventional case is raised by 9°C to be 303°C. Therefore, because the flow rate of the superheated steam 100 supplied from the boiler 51 to the steam turbine 52 increases, the power generation efficiency of the power generation plant 50 can be improved.

In the configuration described above, the regenerator 3 includes three stages, which are an upper stage, a middle stage, and a lower stage. That is, these are the upper regenerating unit 31, the middle regenerating unit 32, and the lower regenerating unit 33. However, the regenerator 3 can include two stages, which are upper and lower stages. That is, these are the upper regenerating unit 31 and the lower regenerating unit 33. In this case, the semi-lean-solution extracting pipe 31d in the regenerator 3 is provided between the lean-solution/steam-drain heat recovery unit 35 and the nozzle 32a via the heat recovery device 59, and the pattern 2 and patterns including the pattern 2 shown in FIG. 10 are deleted. Furthermore, the regenerator 3 is not limited to the upper, middle, and lower stages, which are the upper regenerating unit 31, the middle regenerating unit 32, and the lower regenerating unit 33, and can include three or more regenerating units. In this case, a pattern for an increased stage and patterns including this pattern are added.

### Reference Signs List

- 1: cooling column
- 2: absorber
- 3: regenerator
- 4: rich-lean heat exchanger
- 50: power generation plant
- 51: boiler
- 52: steam turbine
- 53: power generator
- 54: flue gas desulfurizer
- 55: CO₂ recovery unit
- 56: stack
- 57: Ljungström heat exchanger
- 58: air preheater
- 59: heat recovery device
- 100: superheated steam
- 101: flue gas
- 101a: decarbonated flue gas
- 102: unburned air
- 103: cooling water
- 104: absorbent
- 104a: lean solution
- 104b: rich solution
- 104c: semi-lean solution
- 105: wash water
- 106: low-pressure steam
- 106a: steam drain
- 107: CO₂ gas
- 108: condensed water
- 109: heat medium

## Claims

1. A heat recovery system of a CO₂ recovery unit including an absorber that removes CO₂ in flue gas discharged from a boiler by absorbing CO₂ by an absorbent, and a regenerator that emits CO₂ from the absorbent having absorbed CO₂ for reusing the absorbent in the absorber, the heat recovery system comprising:
a Ljungström heat exchanger that performs heat exchange between flue gas discharged from the boiler and before reaching the CO₂ recovery unit and unburned air supplied to the boiler; and
an air preheater that preheats the unburned air before reaching the Ljungström heat exchanger by exhaust heat from the CO₂ recovery unit.

2. The heat recovery system of a CO₂ recovery unit according to claim 1, further comprising a heat recovery device that recovers heat of the flue gas before reaching the CO₂ recovery unit through the Ljungström heat exchanger and supplies recovered heat to the CO₂ recovery unit.

3. The heat recovery system of a CO₂ recovery unit according to claim 1 or 2, wherein the heat recovery system is applied to a power generation plant that drives a steam turbine by superheated steam from the boiler to generate power.

4. The heat recovery system of a CO₂ recovery unit according to any one of claims 1 to 3, wherein the air preheater indirectly heats the unburned air by circulating a heat medium heated by heat transfer of exhaust heat from the CO₂ recovery unit.

5. The heat recovery system of a CO₂ recovery unit according to any one of claims 1 to 3, wherein the air preheater directly heats the unburned air by circulating a exhaust heat fluid from the CO₂ recovery unit.

6. A heat recovery method of a CO₂ recovery unit including a CO₂ recovery step of removing CO₂ in flue gas discharged from a boiler by absorbing CO₂ by an absorbent, emitting CO₂ from the absorbent having absorbed CO₂, and of reusing the absorbent for absorbing CO₂, the heat recovery method comprising:
a heat exchanging step of performing heat exchange between flue gas discharged from the boiler and before reaching the CO₂ recovery step and unburned air supplied to the boiler; and
an air preheating step of preheating the unburned air before reaching the heat exchanging step by exhaust heat from the CO₂ recovery step.

7. The heat recovery method of a CO₂ recovery unit according to claim 6, further comprising a heat recovery step of recovering heat of the flue gas before reaching the CO₂ recovery step through the heat exchanging step and of supplying recovered heat to the CO₂ recovery step.

8. The heat recovery method of a CO₂ recovery unit according to claim 6 or 7, further comprising a power generation step of driving a steam turbine by superheated steam from the boiler to generate power.
